# EUROPEAN PATENT APPLICATION

(11) **EP 1 408 499 A2**
(43) Date of publication of application: **14.04.2004**
(21) Application number: 03022843.1
(22) Date of filing: 08.10.2003
(51) Int. Cl.: G11B 20/10, G11B 27/10, G11B 27/11

(54) **Information providing system and method and information recorded medium**

(30) Priority: 09.10.2002 JP 2002296187; 27.12.2002 JP 2002380866
(71) Applicant: Pioneer Corporation, Meguro-ku, Tokyo (JP)
(72) Inventor: Shibasaki, Hiroaki, Meguro-ku Tokyo-to (JP)
(74) Representative: Grünecker, Kinkeldey, Stockmair & Schwanhäusser Anwaltssozietät

(57) **Abstract**

An information reproducing apparatus (1) can have access to an information providing apparatus (2) for providing information via a network (4) and has an information reproducing device (11) for reproducing program information recorded on a recording medium. The information reproducing apparatus (1) acquires identification information corresponding to the program information recorded on the recording medium. It transmits the acquired identification information to the information providing apparatus (2) via the network (1) when the program information recorded on the recording medium is reproduced. Then, it receives related information composed of at least any one of accompanied information related the program information and advertisement information related the program information or the accompanied information via the network (4), the related information being transmitted from the information providing apparatus (2) according to the identification information. Then, it presents the related information to a user when the program information is reproduced.

## Description

### BACKGROUND OF THE INVENTION

### Field of the Invention:

The present invention relates to the technical field of a system and a method that can acquire predetermined information via a network and provide the information to the user in the case where program information recorded on one recording medium is reproduced or in the case where program information recorded on one recording medium is reproduced and is recorded on another recording medium.

### Description of the Related Art:

Inrecent years,information reproducing apparatuses have become prevalent in which recording mediums such as a CD (Compact Disc) for recording sound data (program information) such as music and recording mediums such as a DVD (Digital Versatile Disc) for recording image data as well as sound data are stored in the same storing part, and in response to an instruction from the user, a disc changer automatically exchanges a recording medium to be reproduced and reproduction is performed.

However, in such information reproducing apparatuses, when sound data is reproduced from a CD having not recorded image data, a display screen has a so-called blue background, resulting in no effective use of the display.

In consideration of the above problem, in a reproducing apparatus disclosed in Japanese Patent Laid-Open No. 2000-268543, the user matches image data having been recorded on a memory card or the like with sound data, records the image data on a HD (Hard Disc) beforehand in the reproducing apparatus, and reproduces the sound data from a CD. In this case, recorded image data is read and is outputted onto a display.

Further, information reproducing/recording apparatuses capable of automatically recording on a HD sound data recorded on a CD, so-called CD ripping have been known in recent years. According to such apparatuses, for example, the user can record sound data, which has been stored in many CDs purchased by the user, onaHD. Particularly when such apparatuses are on-vehicle, it is possible to eliminate a troublesome procedure of bringing many CDs in a vehicle (for example, car) every time the user rides in a vehicle.

However, in such conventional information producing apparatuses, it is necessary to record image data, which is to be shown on a display, beforehand on a HD in the reproducing apparatus when sound data is reproduced from a CD. Hence, it is considered that the procedure is quite troublesome and complicated to the user. Further, such image data is selected by the user . There is no aspect that others provide some kind of information to the user.

Moreover, for example, when sound data stored in a CD purchased by the user is recorded on a HD in the conventional on-vehicle information reproducing/recording apparatus, it is not necessary to bring the CD in a vehicle. However, jacket photographs stored in the package of the CD and a booklet describing lyrics and so on are not brought into'the vehicle. Although the jacket photographs and the booklet describing lyrics and so on are also valuable contents included in a value paid for purchasing the CD, the user cannot fully use the contents included in the value in the end.

### SUMMARY OF THE INVENTION

It is therefore an obj ect of the present invention to provide an information providing system and method or the like whereby information related program information can be more effectively provided to the user when the program information recorded on a recording medium is reproduced.

The above object of the present invention can be achieved by an information providing system; provided with: an information providing apparatus for providing information via a network, and an information reproducing apparatus which can have access to the information providing apparatus via the network and has an information reproducing device for reproducing program information recorded on a recording medium, wherein the information reproducing apparatus has: an identification information acquiring device which acquires identification information corresponding to the program information recorded on the recording medium, an identification information transmitting device which transmits the acquired identification information to theinformation providing apparatus via the network when the program information recorded on the recording medium is reproduced, a related information receiving device which receives related information composed of at least any one of accompanied information related the program information and advertisement information related the program information or the accompanied information via the network, the related information being transmitted from the information providing apparatus according to the identification information, and a user presenting device which presents the related information to a user when the program information is reproduced, and the information providing apparatus has: an identification information receiving device which receives the identification information transmitted from the information reproducing apparatus via the network, a related information acquiring device which acquires the related information composed of at least any one of the accompanied information and the advertisement information basedon theidentificationinformation,and a related information transmitting device which transmits the related information to the information reproducing apparatus via the network.

According to the present invention, the related information can be provided more effectively without inconveniencing the user. Further, if related information includes advertisement information such as promotion information, for example, it is possible to more effectively advertise music, an artist, a label, and so on to the user.

In one aspect of the system of the present invention, the information reproducing apparatus comprises an information recording device which reproduces the program information recorded on the recording medium and records the program information on another recording medium.

In another aspect of the system of the present invention, the recording medium is a detachable recording medium occupied by the user.

In further aspect of the system of the present invention, the information reproducing apparatus further comprises a related information storing device which matches the related information with the identification information and stores the related information and the identification information in a memory.

In further aspect of the system of the present invention, the identification information transmitting device decides whether or not the related information matched with the identification information is stored in the memory, if it is decided that the related information is stored, the identification information transmitting device acquires the related information matched with the identification information from the memory without transmitting the identification information, and the user presenting device presents the related information to the user when the program information is reproduced.

In further aspect of the system of the present invention, the information reproducing apparatus further comprises a selecting instruction receiving device which receives an instruction to select desired related information to be presented from the user, and the user presenting device presents the selected related information to the user when the program information is reproduced.

In further aspect of the system of the present invention, the information providing apparatus further comprises a related information selecting device which selects related information to be acquired or transmitted according to the identification information, and the related information transmitting device transmits the related information selected by the related information selecting device to the information reproducing apparatus.

In further aspect of the system of the present invention, the information providing apparatus further comprises a user information managing device which manages user information for each user of the information reproducing apparatus, the user information managing device updates the user information based on the identification information every time the identification information is transmitted from the information reproducing apparatus, and the related information acquiring device acquires the advertisementinformation matching with the user information.

According this aspect, the advertisement information regarding a recording medium of the same genre and the same artist as program information stored in a recording medium occupied by the user, can acquired as related information, it is possible to increase users' appetite for purchasing the recording medium.

In further aspect of the system of the present invention, the user presenting device displays the accompanied information and the advertisement information on the same screen to present the accompanied information and the advertisement information to the user.

According this aspect, it is possible to increase users' appetite for purchasing the recording medium corresponding to the advertisement information all the more.

In further aspect of the system of the present invention, the accompanied information includes at least one piece of data about a jacket photograph stored in a package of the recording medium, a photograph printed on a booklet, lyrics, a liner note, music information, artist information, and label information.

In further aspect of the system of the present invention, the information providing apparatus is constituted of an information providing service server and a contents server, the information providing service server comprises the identification information receiving device and transmits the identification information received by the identification information receiving device to the contents server via a communication means, the contents server comprises the related information acquiring device, the related information transmitting device, and a related information database for storing the related information and receives the identification information transmitted from the information providing service server, the related information acquiring device acquires the related information from the related information database based on the identification information, and the related information transmitting device transmits the related information to the information reproducing/recording apparatus or the information reproducing/recording apparatus via the network.

In further aspect of the system of the present invention, the information reproducing apparatus comprises: a memory for storing the related information composed of at least one of the accompanied information related the program information and the advertisement information related the program information or the accompanied information, a presentation permission request information transmitting device which transmits presentation permission request information to the information providing apparatus via the network when the program information recorded on the recording medium is reproduced, the presentation permission request information indicating a request to permit presentation of the related information corresponding to the program information, and a presentation permission information receiving device which receives presentation permission information via the network when the presentation permission information indicating permission to present the related information is transmitted from the information providing apparatus, the user presenting device reads, from the memory, the related information corresponding to permission for presentation indicated by the presentation permission information and presents the related information to the user when the program information is reproduced, and theinformation providing apparatuscomprises:a presentation permission request information receiving device which receives the presentation permission request information transmitted from the information reproducing apparatus, a presentation permission deciding device which decides whether or not presentation of the related information should be permitted based on the presentation permission request information, and a presentation permission information transmitting device which transmits the presentation permission information to the information reproducing apparatus via the network if it is decided that the presentation should be permitted.

Accordingthis aspect, for example, a label side can control the presence or absence of the presentation of related information to the user and to manage the presentation so as to prohibit use not matching the purpose.

In further aspect of the system of the present invention, the memory stores presentation permission confirming period information or presentation permission confirming due date information about the related information, the information reproducing apparatus further comprises a transmission deciding device which decides whether or not the presentation permission request information should be transmitted to the information providing apparatus based on the presentation permission confirming period information or presentation permission confirming due date information, and the presentation permission request information transmitting device transmits the presentation permission request information to the information providing apparatus via the network if it is decided that the presentation permission request information should be transmitted to the information providing apparatus.

According this aspect, the presentation of related information to the user can be controlled in an efficient manner.

In further aspect of the system of the present invention, the presentation permission confirming period information or presentation permission confirming due date information is attached to the related information and is transmitted from the information providing apparatus.

In further aspect of the system of the present invention, the presentation permission request information includes the identification information, the information providing apparatus further comprises a related information update deciding device which decides whether or not the related information corresponding to the identification information is updated if it is decided that presentation should be permitted, the related information acquiring device acquires updated related information if the related information is updated, the presentation permission information transmitting device transmits the updated related information together with the presentation permission information to the information reproducing device via the network, the presentation permission information receiving device receives the updated related information together with the presentation permission information transmitted from the information providing apparatus via the network, and the user presenting device presents the updated related information instead of the related information stored in the memory to the user when the program information is reproduced.

According this aspect, Thus, for example, a label side can intentionally manage the presentation of promotion information which can change with time.

In further aspect of the system of the present invention, the information reproducing apparatus further comprises a related information updating device which updates related information stored in the memory to the updated related information.

In further aspect of the system of the present invention, the presentation permission deciding device decides again whether or not presentation of the related information should be permitted after it is decided that presentation of the related information should be permitted, the presentation permission information transmitting device transmits cancellation information indicating that permission for presentation is cancelled to the information reproducing apparatus via the network if the decision does not permit presentation, the presentation permission information receiving device receives the cancellation information via the network when the cancellation information is transmitted from the information providing apparatus, and the user presenting device stops presentation of the related information indicated by the cancellation information.

In further aspect of the system of the present invention, the information providing apparatus further comprises an erasure information transmitting device which transmits erasure information indicating an instruction to erase the related information to the information reproducing apparatus via the network if the presentation permission deciding device decides that presentation should not be permitted, and the information reproducing apparatus comprises: an erasure information receiving device which receives the erasure information via the network when the erasure information is transmitted from the information providing apparatus, and a related information erasing device which erases related information to be erased from the memory, the related information being indicated by the erasure information.

In further aspect of the system of the present invention, the presentation permission deciding device decides that presentation of the accompanied information should be permitted on condition that advertisement information of the related information is presented, when the presentation permission request information transmitted from the information reproducing apparatus requests permission to present only the accompanied information of the related information, the presentation permission information transmitting device includes the condition for presenting the advertisement information into the presentation permission information and transmits the presentation permission information to the information reproducing apparatus via the network, and the user presenting device presents advertisement information corresponding to the presenting condition to the user together with the accompanied information corresponding to permission for presentation indicated by the presentation permission information when the program information is reproduced.

In further aspect of the system of the present invention, the information providing apparatus further comprises a related information update deciding device which decides whether or not related information corresponding to the identification information is updated when the identification information is received, the related information acquiring device acquires the updated related information if the related information is updated, the related information transmitting device transmits the updated related information to the information reproducing apparatus via the network, the information reproducing apparatus comprises a memory for storing related information composed of at least any one of accompanied information related the program information and advertisement information related the program information or the accompanied information, the related information receiving device receives the updated related information if the updated related information corresponding to the identification information is transmitted from the information providing apparatus, and the user presenting device presents the updated related information to the user when the program information is reproduced.

In further aspect of the system of the present invention, if the updated related information is not received in a predetermined time, the user presenting device reads the related information corresponding to the identification information from the memory and presents the related information to the user when the program information is reproduced.

In further aspect of the system of the present invention, the memory stores presentation permission confirming period information or presentation permission confirming due date information about the related information, the information reproducing apparatus further comprises a transmission deciding device which decides whether or not theidentificationinformation should be transmitted to the information providing apparatus based on the presentation permission confirming period information or presentation permission confirming due date information, and the identification information transmitting device transmits the identification information to the information providing apparatus via the network if it is decided that the identification information should be transmitted to the information providing apparatus.

In further aspect of the system of the present invention, the presentation permission confirming period information or presentation permission confirming due date information is attached to the related information and is transmitted from the information providing apparatus.

In further aspect of the system of the present invention, the information reproducing apparatus further comprises a related information updating device which updates the related information stored in the memory to the updated related information.

In further aspect of the system of the present invention, a part of the related information has been stored beforehand in the memory.

In still further aspect of the system of the present invention, a part of the related information is provided by a detachable recording medium.

The above object of the present invention can be achieved by an information reproducing apparatus which can have access to an information providing apparatus for providing information via a network and has an information reproducing device for reproducing program information recorded on a recording medium, provided with: an identification information acquiring device which acquires identification information corresponding to the program information recorded on the recording medium, an identification information transmitting device which transmits the acquired identification information to the information providing apparatus via the network when the program information recorded on the recording medium is reproduced, a related information receiving device which receives related information composed of at least any one of accompanied information related the program information and advertisement information related the program information or the accompanied information via the network, the related information being transmitted from the information providing apparatus according to the identification information, and a user presenting device which presents the related information to a user when the program information is reproduced.

The above obj ect of the present invention can be achieved by an information providing apparatus for providing information via a network when being accessed via the network from an information reproducing apparatus having an information reproducing device which reproduces program information recorded on a recording medium, provided with: an identification information receiving device which receives the identification information transmitted from the information reproducing apparatus via the network, a related information acquiring device which acquires related information composed of at least any one of accompanied information related the program information and advertisement information related the program information or the accompanied information based on the identification information, and a related information transmitting device which transmits the related information to the information reproducing apparatus via the network.

The above object of the present invention can be achieved by an information recorded medium wherein a program for computer which can have access to an information providing apparatus for providing information via a network and has an information reproducing device for reproducing program information recorded on a recording medium, is recorded so as to be read by the computer, the program makes the computer function as: transmitting the acquired identification information to the information providing apparatus via the network when the program information recorded on the recording medium is reproduced, receiving related information composed of at least any one of accompanied information related the program information and advertisement information related the program information or the accompanied information via the network, the related information being transmitted from the information providing apparatus according to the identification information, and presenting the related information to a user when the program information is reproduced.

The above obj ect of the present invention can be achieved by an information recorded medium wherein a program for computer for providing information via a network when being accessed via the network from an information reproducing apparatus having an information reproducing device which reproduces program information recorded on a recording medium, is recorded so as to be read by the computer, the program makes the computer function as: receiving the identification information transmitted from the information reproducing apparatus via the network, acquiring related information composed of at least any one of accompanied information related the program information and advertisement information related the program information or the accompanied information based on the identification information, and transmitting the related information to the information reproducing apparatus via the network.

The above obj ect of the present invention can be achieved by an information providing method in an information providing system comprising an information providing apparatus for providing information via a network, and an information reproducing apparatus which can have access to the information providing apparatus via the network and has an information reproducing device for reproducing program information recorded on a recording medium, is provided the processes of: acquiring identification information corresponding to the program information recorded on the recording medium in the information reproducing apparatus, transmitting the acquired identification information to the information providing apparatus via the network when the program information recorded on the recording medium is reproduced, receiving related information composed of at least any one of accompaniedinformation related the program information and advertisement information related the program information or the accompanied information via the network, the related information being transmitted from the information providing apparatus according to the identification information, and presenting the related information to a user when the program information is reproduced in the information reproducing apparatus, receiving the identification information transmitted from the information reproducing apparatus via the network in the information providing apparatus, acquiring the related information composed of at least any one of the accompanied information and the advertisement information based on the identification information, and transmitting the related information to the information reproducing apparatus via the network.

### BRIEF DESCRIPTION OF THE DRAWINGS

FIG. 1 is a block diagram showing the schematic configuration of an on-vehicle AV system S;
FIG. 2 is a flowchart showing processing performed in a control section 17 of an on-vehicle AV apparatus 1 according to Embodiment 1;
FIG. 3A is a flowchart showing processing performed in a control section 24 of an information providing server 2 according to Embodiment 1;
FIG. 3B is a flowchart showing processing performed in a control section 34 of an information retrieval server 3 according to Embodiment 1;
FIG. 4 is a flowchart showing processing performed in a control section 17 of an on-vehicle AV apparatus 1 according to Embodiment 2;
FIG. 5 is a flowchart showing processing performed in a control section 24 of an information providing server 2 according to Embodiment 2;
FIG. 6 is a flowchart showing processing performed in a control section 17 of an on-vehicle AV apparatus 1 according to Embodiment 3;
FIG. 7 is a flowchart showing processing performed in a control section 24 of an information providing server 2 according to Embodiment 3;
FIG. 8 is a block diagram showing a schematic structural example of an on-vehicle AV system SX; and
FIG. 9 is a sequence showing the flow of information in the on-vehicle AV system SX according to Embodiment 4.

### DETAILED DESCRIPTION OF THE PREFERRED EMBODIMENTS

A preferred embodiment of the present application will be discussed below in accordance with the accompanying drawings. The following embodiment will describe that the present application is used for an on-vehicle AV (Audio Visual) system.

### (Embodiment 1)

First, an on-vehicle AV system S of Embodiment 1 will be discussed below.

### [The configuration and functions of the on-vehicle AV system]

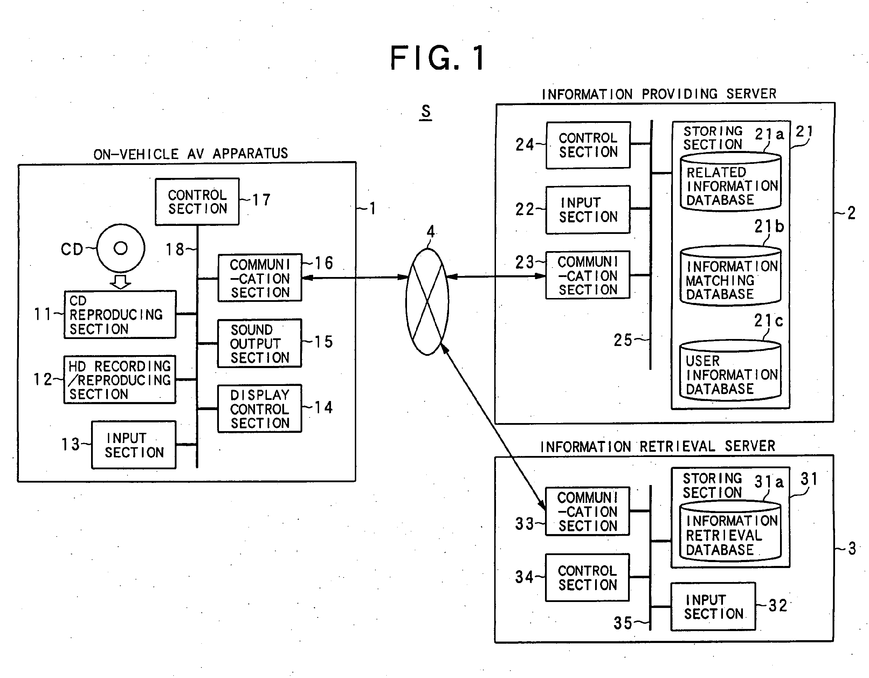

Referring to FIG. 1, the configuration and functions of the on-vehicle AV system will be firstly discussed according to the present embodiment. FIG. 1 is a block diagram showing the schematic configuration of an on-vehicle AV system S as an example of the information providing system of the present application.

As shown in FIG . 1, the on-vehicle AV system S is constituted of an on-vehicle AV apparatus 1 serving as an example of an information reproducing apparatus of the present application, an information providing server 2 and an information retrieval server 3 serving as an example of an information providing apparatus of the present application. The information providing server 2 and the information retrieval server 3 are connected to each other via a network 4. Further, the on-vehicle AV apparatus 1 can have access to the information providing server 2 and the information retrieval server 3 via the network 4. The network 4 is constituted of, for example, a mobile communication network and the Internet or the like. Additionally, a plurality of on-vehicle AV apparatuses 1 are actually provided according to the number of users.

### [On-vehicle AV apparatus]

First, the configuration and functions of the on-vehicle AV apparatus 1 will be discussed below.

The on-vehicle AV apparatus 1 is mounted (installed) in a vehicle. As shown in FIG. 1, the on-vehicle AV apparatus 1 has a CD (Compact Disc) reproducing section (unit) 11, a HD (Hard Disc) recording/reproducing section 12, an input section 13 including a remote controller and operating buttons, a display control section 14, a sound output section 15, a communication section 16, and a control section (controller) 17 for controlling the components . The components are connected to one another via a bus 18.

A function as an information reproducing device, which reproduces program information recorded on a CD serving as an example of a recording medium, is performed by the CD reproducing section 11 under the control of the control section 17 . Moreover, under the control of the control section 17, a function as an information recording device (ripping function) is performed by the CD reproducing section 11 and the HD recording/reproducing section 12. The function as the information recording device reproduces program information recorded on a CD serving as an example of a recording medium and records the program information on a HD serving as an example of another recordingmedium. Besides , the program information includes sound data (particularly music data about music), image data, text data, and compressed data thereof . The following explanation will describe music data as an example of the program information.

The CD reproducing section 11 has a loading mechanism (a mounting mechanism) for loading a CD (e . g. , a CD which is legally purchased by the user and is occupied by the user), a pickup for optically reading music data recorded on a CD, a spindle motor for rotationally driving a CD , a servo circuit for performing servo control on the spindle motor and the pickup, and a signal processing section for performing predetermined demodulation on read music data (RF signal). Under the control of the control section 17, music data is reproduced and is outputted to the HD recording/reproducing section 12 and the sound output section 15 via the bus 18. Further, the CD reproducing section 11 reads out TOC (Table of Contents) information, which serves as an example of identification information recorded on the innermost part (read in area) of a CD, and outputs the information via the bus 18 to the control section 17. As is publicly known, the TOC information includes track number, a starting position of each piece of music data on a CD and includes absolute time on an end position of the final music data and so on.

Besides, although the present embodiment uses the CD reproducing section 11 as an example of the information reproducing device, the information reproducing device is not particularly limited. For example, it is also possible to use a DVD reproducing section for reproducing music and video data recorded on a DVD (Digital Versatile Disc) and an MD reproducing section for reproducing music data recorded on an MD (Mini Disc), and so on. Alternatively, these sections may be combined.

The HD recording/reproducing section 12 has a buffer memory, a HD, and a HD drive. Music data outputted from the CD reproducing section 11 is temporarily stored in a buffer memory via the bus 18 and is recorded on a HD by the HD drive under the control of the control section 17 (only when the user provides an instruction of recording). Further, at this point, the TOC information read out by the CD reproducing section 11 is matched with the music data and is recorded on the HD. Moreover, under the control of the control section 17, the music data recorded on the HD is reproduced and is temporarily stored in the buffer memory. Thereafter, the music data is outputted via the bus 18 to the sound output section 15.

Additionally, when music data recorded on a CD or a HD is reproduced or when music data recorded on a CD is reproduced and is recorded on a HD, the HD recording/reproducing section 12 stores sound data, image data, text data, or the like as related information on a HD by using the HD drive, the related information being composed of at least any one of accompanied information related music data (described later) transmitted (provided) from the information providing server 2 and advertisement information related the music data or the accompanied information. Further, theHD recording/reproducing section 12 stores the TOC information, which has been read from the CD, in a predetermined memory of the HD while the TOC information is matched with the related information. In this case, the TOC information may be stored in a nonvolatile memory (e.g., EEPROM) which is different from the HD. Then, the image data, text data, sound data or the like having been recorded on the HD are reproduced under the control of the control section 17. The data is temporarily stored in the buffer memory and is outputted via the bus 18 to any one of the display control section 14 and the sound output section 15.

Besides, the HD stores information required to have access to the information providing server 2 and the information retrieval server 3 via the network 4 (e.g., addresses on the network).

In addition, although the HD recording/reproducing section 12 is used as an example in the present embodiment, the HD recording/reproducing section 12 is not particularly limited. For example, it is also possible to use a CD-R recording/reproducing section for recording and reproducing music data on a CD-R and a DVD-R recording/reproducing section for recording and reproducing music data on a DVD-R/W, and so on. Alternatively, these sections may be used together.

Subsequently, the input section 13 receives an operation instruction from the user in response to an operation performed on the remote controller or the operating buttons by the user. An operating signal corresponding to the operation is generated and is outputted via the bus 18 to the control section 17 and so on.

The display section 14 includes a decoder for performing predetermined decryption (decoding) on image data, a liquid crystal display panel, and a display processing section for displaying image data and text data on the liquid crystal display panel. Under the control of the control section 17, information required for an operation of the on-vehicle AV apparatus 1 is displayed as character information and so on. Moreover, under the control of the control section 17 , the display control section 14 displays the image data and text data as related information provided from the information providing server 2, as an image, text, and so on. Furthermore, under the control of the control section 17, the display control section 14 displays the image data and text data outputted from the HD recording/reproducing section 12, as an image, text, and so on.

The sound output section 15 includes a sound processing section for performing predetermined sound processing on sound data, a DAC (Digital-to-Analog Converter) for converting digital sound data to an analog sound signal, an amplifier for amplifying an analog sound signal, and a speaker for outputting the amplified analog sound signal as an acoustic wave. With this configuration, the sound output section 15 outputs music data, which has been outputted from the CD reproducing section 11, as an acoustic wave from the speaker under the control of the control section 17. Further, the sound output section 15 outputs sound data about the related information, which has been provided from the information providing server 2, as an acoustic wave from the speaker under the control of the control section 17. Moreover, the sound output section 15 outputs sound data, which has been outputted from the HD recording/reproducing section 12, as an acoustic wave from the speaker under the control of the control section 17.

The communication section 16 performs data communication with the information providing server 2 or the information retrieval server 3 via the network 4. Under the control of the control section 17, when information (signal) to be transmitted is inputted, the communication section 16 performs predetermined output interface processing on the signal and outputs the signal via the network 4 to the information providing server 2 or the information retrieval server 3. Further, under the control of the control section 17, the communication section 16 performs predetermined input interface processing on information (signal) transmitted from the information providing server 2 or the information retrieval server 3 via the network 4 and outputs the information to the control section 17 and so on.

Then, the control section 17 has a CPU serving as a computer having an arithmetic function, a RAM for operations, a ROM for storing various processing programs such as a communication processing program and data (including apparatus identification information described below), an oscillation circuit, and so on. In response to an operating signal from the input section 5, the control section 17 generates control information for controlling the components based on the operation contents included in the signal and outputs the information via the bus 18 to the corresponding components. Thus, the control section 17 exercises control over the operations of the components constituting the on-vehicle AV apparatus 1.

Further, the control section 17 executes an information presenting program stored in the ROM or the like so as to function as an identification information acquiring device, an identification information transmitting device, a related information receiving device, a user presenting device, a related informationstoring device,and aselecting instruction receiving device of the present application.

To be specific, the control section 17 functions as the identification information acquiring device, so that TOC information corresponding to music data recorded on a CD is acquired from the CD reproducing section 11 (when music data has been already recorded on a HD, TOC information is acquired from the HD recording/reproducing section 12).

Subsequently, when music data recorded on a CD or a HD is reproduced (hereinafter, referred to as "CD reproduction or HD reproduction") or when music data recorded on a CD is reproduced and is recorded on a HD (hereinafter, referred to as "CD ripping"), the control section 17 functions as the identification information transmitting device together with the communication section 16 in order to obtain related information which is composed of at least any one of accompanied information related the music data and advertisement information related the music data or the accompanied information, so that the TOC information is transmitted via the network 4 to the information providing server 2 or the information retrieval server 3.

Moreover, the control section 17 functions as the related information receiving device together with the communication section 16, so that the control section 17 receives via the network 4 the related information having been transmitted from the information providing server 2 according to the TOC information. Then, the control section 17 functions as the user presenting device, so that when the music data is reproduced or when the music data is reproduced and recorded, the related information is presented to the user. For example, if the related information is image data and text data, the data is displayed on the liquid crystal display panel. If the related information is sound data, the data is outputted from the speaker. Hence, the user can recognize the related information when the music data is reproduced.

In this case, the reproduction of the music data is not limited to a time period during which music is actually reproduced. The reproduction is a wide concept including loading for preparing for reproduction (entering a reproducing operation, though reproduction has not been actually started yet). Moreover, the recording of music data also has the same concept as the reproduction.

Additionally, the control section 17 functions as the related information storing device together with the HD recording/reproducing section 12, so that the related information is stored in a predetermined memory region of a HD while being matched with the TOC information. In this way, once the related information is stored in a HD, the related information may not be transmitted from the information providing server 2 when the same music data is reproduced from a CD or a HD. In this case, the control section 17 decides whether or not related information matched with the TOC information is stored in a HD in the case of CD reproduction, HD reproduction, and CD ripping. If it is decided that the related information is stored, the TOC information is not transmitted, related information matched with the TOC information is acquired from the HD, and the related information is presented to the user. However, regarding advertisement information, since it is assumed that information contents to be provided to the user are changed, the control section 17 may acquire, from the information providing server 2, information about which information should be selected and presented from information having been stored in the HD . Further, it is assumed that advertisement information itself is successively updated in the information providing server 2. Hence, in this case, the control section 17 may acquire accompanied information from the HD and advertisement information from the information providing server 2.

Moreover, the control section 17 may receive from the user an instruction to select desired related information to be presented, via the input section 13 serving as a selecting instruction receiving device, and the control section 17 may present to the user the related information having been instructed to be selected.

Additionally, the information presenting program may be downloaded from a predetermined server connected to the network 4.

### [Contents of related information]

Subsequently, the following will explain the specific contents of the accompanied information related the music data and the advertisement information related the music data or the accompanied information.

For example,theaccompanied information related the music data is information accompanied (attached) with the music or a CD having stored the music. The information includes image data and text data of CD contents such as jacket photographs (hereinafter, referred to as "CD jacket photographs") on a CD package of the CD having stored the music, and photographs, lyrics, liner notes, music information (e.g., explanation on the background of the music), artist information (e . g . , explanation on a lyricist, a composer, and a singer) , and label information (e.g., explanation on a CD producing and sales organization (company) or the like) printed on a booklet stored in the CD package, In addition, other than the contents of the CD, the information includes attribute information about music data registered for the CD in an information retrieval database 31a of the information retrieval server 3, which will be discussed later, information about the artist of the CD (e.g., portrait photographic images or the like which are not stored in the CD package but are used only for initial products) , sound information of lyrics (reading of lyrics) which are printed on the booklet stored in the CD package.

Besides, if the provision of such accompanied information is a part of promotion performed by a CD producing and sales company, the accompanied information can be also called advertisement information.

The advertisement information related music data is, for example, information provided to advertise the music or a CD having stored the music. For example, the advertisement information includes jacket photographs of another CD (e.g., an album) having stored the music, and the hit charts including the music.

The advertisement information related the accompanied information is, for example, information for advertising the accompanied information. The advertisement information includes, for example, promotion information about a new album released by the artist of the music (e.g., image or sound information indicating that the artist will release a new album on one day of next week) , promotion information about a new release of the label of the music (e.g., listed images or sound information about new CDs which will be released in the future by the producing and sales company) , and promotion information about a new release in the genre of the music (e.g., rock, jazz, etc.).

The accompanied information and the advertisement information may include moving images (e.g., a promotion video (PV) of the artist) as well as static images such as jacket photographic images.

### [Information providing server]

Subsequently, the following will explain the configuration and functions of the information providing server 2.

The information providing server 2 is fixed and installed by the information provider. As shown in FIG . 1, the information server 2 includes a storing section 21, an input section 22, a communication section 23, and a control section 24. These components are connected to one another via a bus 25.

For example, the storing section 21 is constituted of a hard disc or the like. As shown in FIG . 1, an related information database 21a, an information matching database 21b, and a user information database 21c are configured in the storing section 21.

The related information database 21a registers (stores) accompanied information related music data and image data, text data, sound data, and so on concerning advertisement information related music data or the accompanied information. The accompanied information and the advertisement information are supposed to constitute the related information. Each piece of the information is provided with an identifier (e.g. , a different identifier for each kind of CDs). Besides, regarding the provision of the identifier, various kinds of processing are considered that include the provision of the same identifier to the related items of the information and the provision of a different identifier for each kind of the information even in related items.

Further, for example, when a new CD is released, the accompanied information is registered in the related information database 21a via the input section 22 by the operator. Moreover, the advertisement information is registered and updated at any time via the input section 22 by the operator in response to a request from the CD sales and producing company. Further, the history of updating related information is also registered while being matched with the related information.

The information matching database 21b registers (stores) information (hereinafter, referred to as "matching information") for matching (correspondence) accompanied information and advertisement information which are registered in the related information database 21a, with attribute information (matched with TOC information) about music data registered in the information retrieval database 31a of the information retrieval server 3, which will be discussed later. For example, matching information is registered which indicates that accompanied information with an identifier of "abc" is matched with attribute information with an identifier of "xyz". For example, such matching information is also registered via the input section 22 by the operator.

The user information database 21c registers (stores) the user information of the on-vehicle AV apparatus 1 for each user. For example, the user information includes apparatus identification information (specific to each the on-vehicle AV apparatuses 1), written information written in a user registration form (name, address, telephone number, e-mail address, sex, and so on that are written by the user when the on-vehicle AV apparatus 1 is purchased), and the history of access from the on-vehicle AV apparatus 1. The history of access includes the date and time of access and information for specifying related information having been transmitted to the on-vehicle AV apparatus 1 when access is made. Namely, based on the information for specifying the related information, it is possible to recognize which CD is occupied by the user. For example, the apparatus identification information and the written information are registered via the input section 22 by the operator when the on-vehicle AV apparatus 1 is purchased.

The input section 22 is constituted of a keyboard, a mouse, and so on. In response to an operation performed by the operator, the input section 22 receives an operation instruction from the operator. An operating signal corresponding to the operation is generated and is outputted via the bus 25 to the control section 24 and so on.

The communication section 23 is provided to perform data communication with the on-vehicle AV apparatus 1 or an information retrieval 3 via the network 4.

The control section 24 has a CPU serving as a computer having an arithmetic function, a RAM for operations, a ROM for storing data and various programs such as a communication program, an oscillation circuit, and so on. When an operating signal is received from the input section 22, the control section 24 generates control information for controlling the components based on the operation contents included in the signal and outputs the information via the bus 25 to the corresponding components. Thus, the control section 24 exercises control over the operations of the components constituting the information providing server 2.

Further, the control section 24 executes an information providing program stored in the ROM or the like so as to function as an identification information receiving device, a related information acquiring device, a related information transmitting device, a related information selecting device, and a user information managing device.

To be specific, the control section 24 functions as the identification information receiving device together with the communication section 23, so that TOC information transmitted from the on-vehicle AV apparatus 1 is received via the network 4.

Then, the control section 24 functions as the related information acquiring device, so that related information composed of at least any one of the accompanied information and the advertisement information is acquired from the related information database 21a based on the TOC information. For example, the control section 24 transmits the TOC information via the network 4 to the information retrieval server 3, acquires attribute information about music data transmitted (returned) from the information retrieval server 3, and acquires, as related information (attribute information may be included in related information), any one or both of accompanied information and advertisement information matched with the attribute information based on matching information registered in the information matching database 21b. Then, the control section 24 functions as a related information transmitting device together with the communication section 23, so that the related information is transmitted via the network 4 to the on-vehicle AV apparatus 1.

Moreover, the control section 24 functions as a related information selecting device, so that related information to be acquired or transmitted according to the TOC information is selected. For example, in the case of a plurality of pieces of accompanied information or advertisement information that are matched with the attribute information, in order to request the selection of information desired by the user from the pieces of information, summary (e.g., a name) information of the information is transmitted via the network 4 to the on-vehicle AV apparatus 1, the user is caused to select information, information indicating selection results is received from the on-vehicle AV apparatus 1 via the network 4, and information is selected as the related information based on the results.

Moreover, the control section 24 functions as the user information managing device, user information is managed for each user of the on-vehicle AV apparatus 1 by using the user information database 21c. Every time TOC information is transmitted from the on-vehicle AV apparatus 1, user information is updated based on the TOC information. Namely, the control section 24 can always recognize the latest user information (e.g., information indicating which CD is currently occupied by the user) by updating the access history included in user information. Further, when the control section 24 acquires the related information, advertisement information corresponding to the user information is acquired. For example, regarding music data stored on a CD currently occupied (held) by the user, advertisement information about a CD of the same genre and the same artist is acquired.

Additionally, the information providing program may be downloaded from a predetermined server connected to the network 4.

### [Information retrieval server]

Subsequently, the configuration and functions of the information retrieval server 3 will be explained below.

As shown in FIG. 1, the information retrieval server 3 is constituted of a storing section 31, an input section 32, a communication section 33, and a control section 34. These components are connected to one another via a bus 35.

The storing section 31 is constituted of a hard disc and so on. In this case, as shown in FIG. 1, the storing section 31 is constituted of an information retrieval database 31a.

The information retrieval database 31a is provided to search for attribute information about music data based on TOC information. In this case, attribute information (e.g., a CD title, asongtitle, anartist'sname, a composer' s name, aproducer, and so on) about music data is registered (stored) while being matched with the TOC information. A publicly known so-called CDDB can be used for the information retrieval database 31a. Further, as described above, each piece of the information is provided with an identifier. Moreover, for example, when a new CD is released, the attribute information is registered by the operator in the information retrieval database 31a via the input section 32.

The control section 34 has a CPU serving as a computer having an arithmetic function, a RAM for operations, a ROM for storing data and various programs such as a communication program, an oscillation circuit, and so on. In response to an operating signal from the input section 32 , the control section 34 generates control information for controlling the components based on the operation contents included in the signal and outputs the information via the bus 35 to the corresponding components. Thus, the control section 34 exercises control over the operations of the components constituting the information retrieval server 3. Then, when TOC information transmitted from the information providing server 2 is received via the network 4 and the communication section 33, the control section 34 refers to the information retrieval database 31a, acquires attribute information about music data corresponding to the TOC information, and transmits (returns) the attribute information to the information providing server 2.

Besides, the TOC information may be directly received from the on-vehicle AV apparatus 1 via the network 4 without passing through the information providing server 2 . In this case , the control section 34 acquires attribute information about music data corresponding to the TOC information from the on-vehicle AV apparatus 1 and transmits the attribute information to the information providing server 2.

The functions of the input section 32 and the communication section 33 are similar to those of the input section 22 and the communication section 23 in the information providing server 2.

Additionally, in the present embodiment, the information providing server 2 and the information retrieval server 3 serving as examples of the information providing apparatus according to the present application are separated as hardware. A server integrating the functions of the information providing server 2 and the information retrieval server 3 is also applicable.

### [Operations of the on-vehicle AV system]

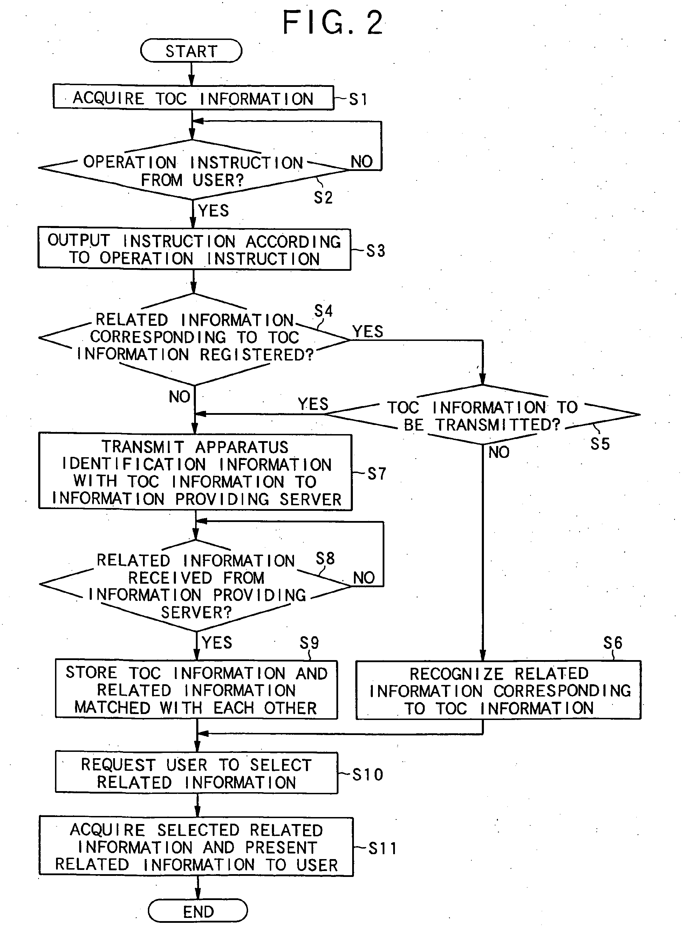

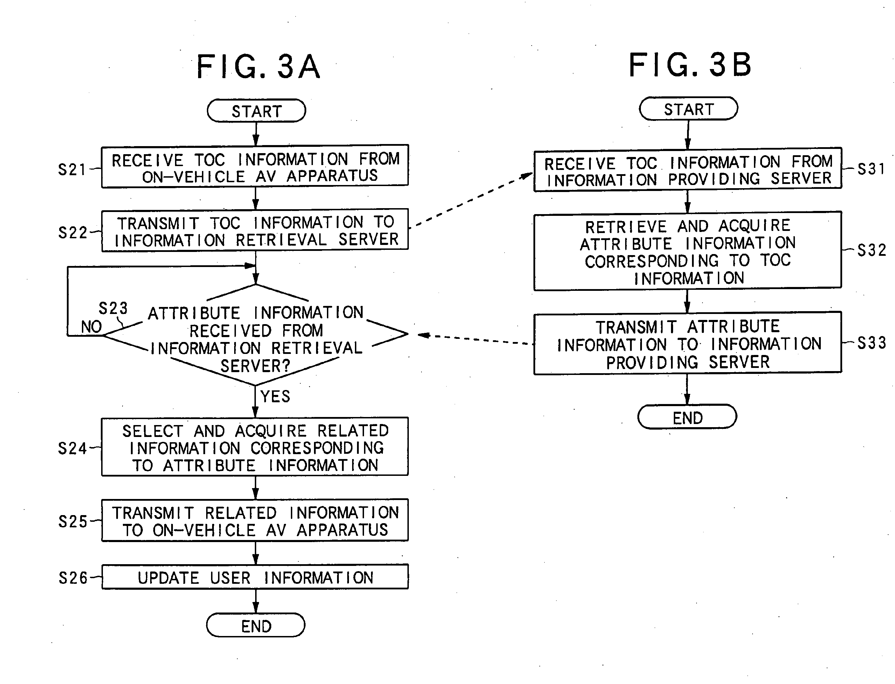

Referring to FIGS. 1 to 3 , the operations of the on-vehicle AV system S of Embodiment 1 will be described below. FIGS. 2 and 3 show processing when CD reproduction, HD reproduction, and CD ripping are performed in the on-vehicle AV apparatus 1 of Embodiment 1. To be specific, FIG. 2 is a flowchart showing processing performed in the control section 17 of the on-vehicle AV apparatus 1, FIG. 3A is a flowchart showing processing performed in the control section 24 of the information providing server 2, and FIG. 3B is a flowchart showing processing performed in the control section 34 of the information retrieval server 3.

Referring to FIG. 2, processing in the on-vehicle AV apparatus 1 will be firstly described below. Besides, the processing of FIG. 2 is performed by executing the information providing program in the control section 17.

In the processing of FIG. 2, for example, when a CD which is purchased at a store and is occupied by the user is brought into a vehicle and is loaded into the CD reproducing section 11, the control section 17 of the on-vehicle AV apparatus 1 acquires TOC information read from the innermost periphery of the CD by the CD reproducing section 11, and the control section 17 stores the TOC information in, for example, the RAM for operations (step S1).

Subsequently, when the user operates the operating buttons provided on the input section 13 to input any one of operation instructions of CD reproduction, HD reproduction, and CD ripping, the control section 17 recognizes the instruction (step S2: Y) and outputs a command corresponding to the operation instruction to each of the sections (step S3).

For example, when an operation instruction of CD reproduction is inputted, a command to reproduce music data is provided to the CD reproducing section 11. Thus, the CD reproducing section 11 makes a transition to a reproducing operation after being prepared for reproduction.

On the other hand, when an operation instruction of CD ripping is inputted, a command to reproduce music data is provided to the CD reproducing section 11, and a command to record music data is provided to the HD recording/reproducing section 12. Thus, the CD reproducing section 11 makes a transition to a reproducing operation after being prepared for reproduction, and the HD recording/reproducing section 12 makes a transition to a recording operation after being prepared for recording (namely, CD ripping is normally performed concurrently with CD reproduction). Besides, when music data is recorded on a HD, TOC information is also stored while being matched with the music data.

On the other hand, when an operation instruction of HD reproduction is inputted, a command to reproduce music data is provided to the HD recording/reproducing section 12, and TOC information, which has been stored on a HD while being matched with music data, is acquired from the HD recording/reproducing section 12. Hence, the HD recording/reproducing section 12 makes a transition to a reproducing operation after being prepared for reproduction.

Subsequently, the control section 17 decides whether or not related information corresponding to acquired TOC information is stored, for example, in a HD (step S4). If it is decided that the related information is stored (step S4: Y) , that is, If related information has been already provided from the information providing server 2, the control section 17 decides whether or not the TOC information should be transmitted to the information providing server 2 (step S5). In this case, whether or not the TOC information should be transmitted may be decided based on information which has been set beforehand by the user via the input section 13 and has been stored in a HD. Alternatively, in every decision, the control section 17 may request (prompt) the user to select whether the TOC information should be transmitted or not via the display control section 14 or the sound output section 15 , and make a decision based on the selection results.

If the control section 17 decides that the TOC information should not be transmitted to the information providing server 2, the control section 17 recognizes related information in a HD (step S6).

On the other hand, if the control section 17 decides that the TOC information should be transmitted to the information providing server 2 , the control section 17 advances to step S7. Namely, this is because even in the case of related information having been stored in a HD, if the related information includes advertisement information being successively updated, new advertisement information needs to be acquired.

On the other hand, in step S4, if the control section 17 decides that related information is not stored (step S4: N), through the communication section 16, the control section 17 establishes communication with the information providing server 2 via the network 4, and transmits apparatus identification information together with acquired TOC information via the network 4 to the information providing server 2 (step S7). Processing performed in the information providing server 2 or the like, which has received the TOC information, will be described later.

Additionally, in the case of the transmission of the TOC information, the control section 17 may establish communication with the information retrieval server 3 via the network 4 and transmit the TOC information and apparatus identification information to the information retrieval server 3. Further, in this case, the control section 17 may transmit only apparatus identification information to the information providing server 2.

Subsequently, when the on-vehicle AV apparatus 1 receives related information, which has been transmitted from the information providing server 2 according to the TOC information, via the network 4 (step S8: Y) , the control section 17 matches the TOC information with the related information and stores the information in the HD recording/reproducing section 12 (step S9). In this way, once related information is stored in a HD, when the same music data is reproduced from a CD or a HD again, the processing of step S5 is performed.

Then, the control section 17 requests the user to select desired related information (step S10). For example, if related information includes a plurality of pieces of accompanied information such as photographic images on a CD jacket, the images of an artist, and the images of lyrics, the list of the titles is displayed on the liquid crystal display panel by the display control section 14, and the selection of one or more pieces of accompanied information through the input section 13 is requested (prompted). Then, when the control section 17 receives through the input section 13 an instruction to select desired related information (in this case, accompanied information) from the user, the related information instructed to be selected is presented to the user during the reproduction of music data or the reproduction/recording of music data (step S11). Thus, the user can see accompanied information such as jacket photographic images and the lyrics of music that are displayed on the screen of the liquid crystal display panel while listening to reproduced music.

Moreover, if related information includes accompanied information and advertisement information, the control section 17 displays the accompanied information and advertisement information on the same screen of the liquid crystal display panel to present the information to the user. For example, a photographic image of the artist of currently reproduced music is displayed on the right half of the screen, and a jacket photographic image of a CD to be released soon by the artist is displayed (release date is also displayed) on the left half of the screen. Thus, it is possible to increase users' appetite for purchasing the CD.

Besides, in step S10, without requesting the user to provide an instruction to select desired related information, the control section 17 may select related information at random.

Subsequently, referring to FIG. 3, the following will describe processing performed in the information providing server 2 and the information retrieval server 3. Additionally, the processing of FIG. 3A is performed by executing the information providing program in the control section 24.

In the processing of FIG. 3A, when the control section 24 of the information providing server 2 receives TOC information and apparatus identification information, which have been transmitted from the on-vehicle AV apparatus 1, via the network 4 (step S21), for example, the control section 24 establishes communication with the information retrieval server 3 through the communication section 23 after processing such as user certification (authentification) is performed based on the apparatus identification information, and the control section 24 transmits the TOC information via the network 4 to the information retrieval server 3 (step S22).

In the processing of FIG. 3B, when the control section 34 of the information retrieval server 3 receives TOC information, which has been transmitted from the information server 2, via the network 4 (step S31) , the control section 34 refers to the information retrieval database 31a, acquires attribute information about music data corresponding to the TOC information (step S32), and transmits (returns) the attribute information to the information providing server 2 (step S33). Additionally, as described above, even if the TOC information is directly received from the on-vehicle AV apparatus 1 via the network 4, the processing of steps S32 and S33 is performed.

A return is made to the processing of FIG. 3A. When the control section 24 of the information providing server 2 receives attribute information, which has been transmitted from the information retrieval server 3, via the network 4 (step S23: Y), based on matching information registered in the information matching database 21b, the control section 24 acquires as related information both or any one of accompanied information and advertisement information that are matched with the attribute information from the related information database 21a (step S24). Then, the control section 24 transmits the related information via the network 4 to the on-vehicle AV apparatus 1 (step S25). Additionally, the control section 24 may transmit the related information attached with identification information.

Subsequently, the control section 24 refers to the user information database 21c and updates user information corresponding to the received apparatus identification information (step S26). Namely, the control section 24 adds, to the user information, information for specifying a date and time of access from the on-vehicle AV apparatus 1 and related information transmitted to the on-vehicle AV apparatus 1. Thus, the control section 24 can always recognize the latest information about which CD is occupied by the user.

Besides, in step S25, the control section 24 may refer to the user information database 21c, specify user information corresponding to apparatus identification information having been transmitted from the on-vehicle AV apparatus 1, and acquires advertisement information matched with the user information as related information. For example, regarding a CD about the same genre and the same artist as music data stored in a CD occupied by the user, when advertisement information is acquired as related information and is transmitted to the on-vehicle AV apparatus 1, it is possible to increase users' appetite for purchasing the CD.

Further, in step S25, if a plurality of pieces of accompanied information or advertisement information acquired as related information are present, the control section 24 may transmit the summary (e.g., a title and so on) information of the information via the network 4, cause the user to select the information, receive information indicating the selection results from the on-vehicle AV apparatus 1 via the network 4, and select the related information based on the information. With this configuration, even if the originally acquired related information has a large amount of data, all the pieces of related information are not transmitted and only the selected pieces of related information are transmitted to the on-vehicle AV apparatus 1. Thus, it is possible to reduce a communication time and a quantity of communication data.

As described above, according to Embodiment 1, TOC information corresponding to music data is acquired from a CD or a HD, related information composed of at least any one of accompanied information related the music data and advertisement information related music data or the accompanied information is acquired based on the TOC information, and the related information is automatically presented to the user when the music data is reproduced or recorded. Hence, the related information can be provided more effectively without inconveniencing the user.

Further, if related information includes advertisement information such as promotion information, it is possible to more effectively advertise music, an artist, a label, and so on to the user.

Moreover, conventionally, the user who purchases a CD can acquire, for example, jacket photographs with a package. On the other hand, the user who purchases a CD by music distribution via internet cannot acquire the image data of the jacket photographs. According to the present embodiment, when the user purchases a CD, the user can acquire related information including the image data of jacket photographs on a CD from the information providing server 2.

Additionally, if music data recorded on a number of CDs purchased by the user is recorded in a HD of the on-vehicle AV apparatus 1, without the necessity for bringing in CD contents such as jacket photographs stored in the CD packages and a booklet describing lyrics, the user can readily acquire the contents from the information providing server 2 and utilize the contents. Moreover, particularly in the on-vehicle AV apparatus 1, even if the CD contents of a booklet cannot be watched under vibrating conditions during traveling and driving or if the CD contents are hard to see in a dark vehicle during the night, it is possible to readily provide the CD contents safely to the user.

Besides, in the present embodiment, the information providing server 2 has the related information database 21a and the information matching database 21b. The databases 21a and 21b may be provided in the information retrieval server 3.

### (Embodiment 2)

Subsequently, an on-vehicle AV system S of Embodiment 2 will be discussed below. Embodiment 2 will describe operations after the provision of related information from an information providing server 2. Namely, the following will describe another embodiment about the processing after step S5 shown in FIG. 2, which was described in Embodiment 1.

Besides, regarding the components of the on-vehicle AV system S according to Embodiment 1, the description of the same configuration and functions is omitted.

First, a control section 17 of the on-vehicle AV apparatus 1 according to Embodiment 2 functions as a presentation permission request information transmitting device, a presentation permission information receiving device, and a transmission deciding device in addition to the configuration and functions of Embodiment 1. Furthermore, instead of the function of Embodiment 1 (as another example), the control section 17 functions as a user presenting device of the present application.

To be specific, in the case of CD reproduction, HD reproduction, and CD ripping, the control section 17 transmits presentation permission request information, which requests permission to present related information corresponding to the music data, via the network 4 to the information providing server 2. Namely, the on-vehicle AV apparatus 1 requests permission to present related information stored in a HD to the user.

In this case, related information corresponding to music data includes at least any one of accompanied information related music data and advertisement information related the music data or the accompanied information. Further, the presentation permission request information includes information required for requesting permission to present related information, that is, information indicating the request, and the TOC information and apparatus identification information which are described in Embodiment 1. Additionally, instead of TOC information, for example, identification information attached to related information beforehand (identification information which is offered at the provision of related information from the information providing server 2) may be included in the presentation permission request information.

Moreover, the presentation permission request information may be information for requesting permission to present any one of accompanied information and advertisement information. Namely, this is because it is also assumed that the user wants to see only accompanied information such as jacket photographs or advertisement information such as promotion information about anew release.

Additionally, the control section 17 may decide whether or not presentation permission request information should be transmitted to the information providing server 2 based on presentation permission confirming period (e.g., one week) or a presentation permission confirming due date (e.g., a date) which is stored in a HD. The presentation permission confirming period or the presentation permission confirming due date may be inputted beforehand by the user from the input section 22. Alternatively, presentation permission confirming period information or presentation permission confirming due date information may be attached to each piece of related information. If presentation permission confirming period information or the like is attached to each piece of related information, the period or date can be changed for each piece of related information. Further, in this case, the presentation permission confirming period (or presentation permission confirming due date) information is determined by, for example, a label, is attached to each piece of related information in the information providing server 2, and is provided (transmitted) to the on-vehicle AV apparatus 1.

Besides, the presentation permission confirming period information or presentation permission confirming due date information may be attached to any one of accompanied information and advertisement information. For example, regarding advertisement information such as promotion information about a new release, a presentation period needs to be limited in many cases (due to the advertising effect decreasing with time). Thus, the presentation permission confirming period information or presentation permission confirming due date information may be attached only to advertisement information. In the case where presentation permission confirming period information or presentation permission confirming due date information is attached only to advertisementinformation,if the control section 17 requests permission to present only accompanied information, it may be decided whether or not the presentation permission request information of accompanied information should be transmitted to the information providing server 2 based on the presentation permission confirming period information or presentation permission confirming due date information which has been attached to advertisement information.

Further, the control section 17 functions as a presentation permission information receiving device together with the communication section 16, so that if presentation permission information indicating permission to present related information is transmitted from the information providing server 2, the presentation permission information is received via a network 4. Namely, as will be described later, the presentation permission information is transmitted if the information providing server 2 grants permission to a request for presentation.

In this case, the presentation permission information includes, for example, TOC information corresponding to related information requested to be presented.

Then, the control section 17 functions as a user presenting device, so that related information corresponding to permission for presentation indicated by presentation permission information is read from a HD serving as an example of a memory, and the related information is presented to the user during the reproduction of the music data or the reproduction/recording of the music data.

Then, a control section 24 of the information providing server 2 according to Embodiment 2 functions as a presentation permission request information receiving device, a presentation permission deciding device, and a presentation permission information transmitting device of the present application in addition to the configuration and functions of Embodiment 1.

To be specific, the control section 24 functions as the presentation permission request information receiving device together with a communication section 23, so that the control section 24 receives presentation permission request information transmitted from the on-vehicle AV apparatus 1.

Then; the control section 24 functions as the presentation permission deciding device, so that the control section 24 decides whether or not the presentation of related information should be permitted based on the presentation permission request information. Subsequently, if the presentation is permitted, the control section 24 functions as the presentation permission information transmitting device together with the communication section 23, so that the control section 24 transmits presentation permission information via the network 4 to the on-vehicle AV apparatus 1.

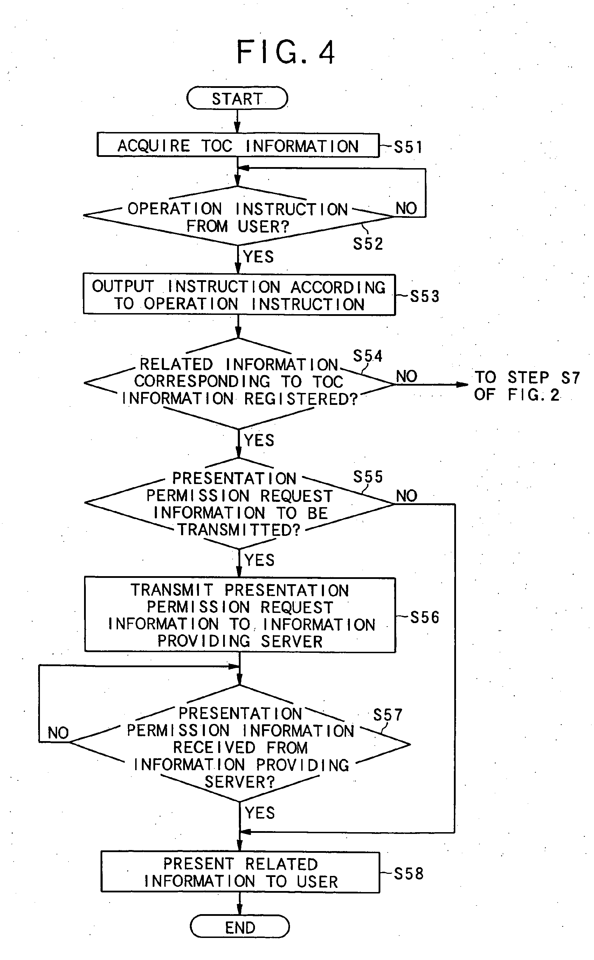

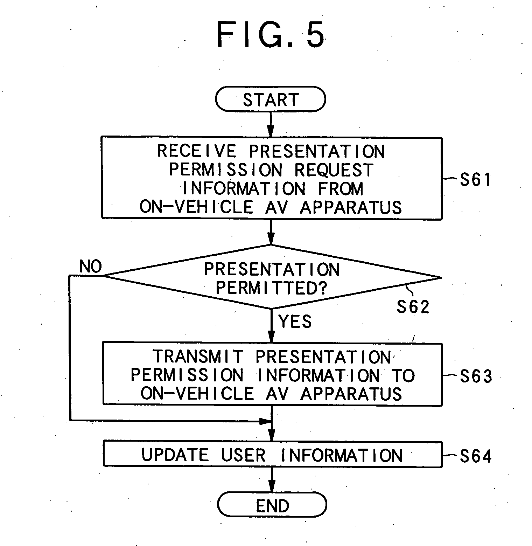

Subsequently, referring to FIGS. 4 and 5, the operations of the on-vehicle AV system S according to Embodiment 2 will be discussed below. FIGS. 4 and 5 show processing when CD reproduction, HD reproduction, and CD ripping are performed in the on-vehicle AV apparatus 1 according to Embodiment 2. To be specific, FIG. 4 is a flowchart showing the processing of the control section 17 in the on-vehicle AV apparatus 1, and FIG. 5 is a flowchart showing processing performed by the control section 24 of the information providing server 2.

Besides, in Embodiment 2, it is assumed that related information has been already provided from the information providing server 2 and stored in a HD of the on-vehicle AV apparatus 1. However, a part of the related information may be provided by, for example, a recording medium such as a detachable CD, DVD, MD, and a card-type recording medium and may be stored in a HD beforehand.

First, referring to FIG. 4, processing performed in the on-vehicle AV apparatus 1 will be discussed below. Besides, the processing of FIG. 4 is performed by executing the information providing program in the control section 17.

In the processing of FIG. 4, the processing of step S51 to step S53 is similar to that of step S1 to step S3 shown in FIG. 2 of Embodiment 1, and thus the explanation thereof is omitted.

In step S54, the control section 17 decides whether or not related information corresponding to acquired TOC information is stored in, for example, a HD. If it is decided that related information is not stored (step S54: N), an advance is made to step S7 shown in FIG. 2 of Embodiment 1. On the other hand, if it is decided that related information is stored (step S54: Y), the control section 17 decides whether or not transmission should be performed on presentation permission request information for requesting permission to present related information corresponding to music data to be reproduced from a CD or the like, based on presentation permission confirming period (e.g., one week) information or presentation permission confirming due date (e.g., a date) information, which is stored in a HD (step S55).

For example, when a presentation permission confirming period (or presentation permission confirming due date) has elapsed since the related information is stored in a HD, the control section 17 decides that the presentation permission request information should be transmitted (step S55: Y). The control section 17 establishes, through the communication section 16, communication with the information providing server 2 via the network 4 and transmits the presentation permission request information via the network 4 to the information providing server 2 (step S56).

Additionally, the control section 17 may transmit the presentation permission request information via the network 4 to the information providing server 2 for each of CD reproduction, HD reproduction, and CD ripping regardless of presentation permission confirming period information or presentation permission confirming due date information.

Besides, processing performed in the information providing server 2 or the like, which has received the presentation permission request information, will be described later.

Subsequently, when the on-vehicle AV apparatus 1 receives presentation permission information indicating permission to present related information having been transmitted from the information server 2 (step S57: Y) , the control section 17 reads, from a HD,relatedinformation (related information corresponding to TOC information acquired in step S51) corresponding to permission for presentation indicated by the presentation permission information, and the control section 17 presents the related information to the user during the reproduction of the music data or the reproduction/recording of the music data (step S58). In this case, when presentation permission information is received, as step S10 shown in FIG. 2 of Embodiment 1, the control section 17 may prompt (request) the user to provide an instruction to select desired related information from related information corresponding permission for presentation, and present the selected related information to the user during the reproduction of music data or the recording of music data.

Referring to FIG. 5, processing performed in the information providing server 2 will be discussed below. Besides, the processing of FIG. 5 is performed by executing the information providing program in the control section 24.

In the processing of FIG. 5, when the control section 24 of the information providing server 2 receives presentation permission request information, which has been transmitted from the on-vehicle AV apparatus 1, via the network 4 (step S61), it is decided whether or not the presentation of related information should be permitted based on the presentation permission request information (step S62). For example, based on TOC information (or identification information having been attached with related information beforehand) included in presentation permission request information, the control section 24 specifies related information corresponding to the TOC information. Further, the control section 24 decides whether or not the presentation of related information should be permitted based on the presence or absence of the appropriateness of presenting the related information. That is, the presence or absence of the appropriateness is condition for the presentation permission of related information.

Additionally, as described in Embodiment 1, the information providing server 2 may transmit TOC information (included in presentation permission request information) to the information retrieval server 3, and specify related information based on matching information registered in the information matching database 21b, based on attribute information returned from the information retrieval server 3.

Then, in step S62, for example, if advertisement information included in related information has old contents or if the contents have been already updated in the related information database 21a, the control section 24 decides that the presentation is not appropriate and permission should not be granted (step S62: N) , otherwise the control section 24 decides that the presentation is appropriate and permission should be granted (step S62 : Y). If it is decided that presentation should be permitted, the control section 24 transmits presentation permission information via the network 4 to the on-vehicle AV apparatus 1 (step S63) and updates user information. Namely, the date and time of access from the on-vehicle AV apparatus 1 and the presence or absence of the transmission of presentation permission information to the on-vehicle AV apparatus 1 are attached to the user information (step S64).

Additionally, in step S62, the control section 24 may specify the user based on apparatus identification information included in presentation permission request information, and decide whether or not the presentation of related information should be permitted based on the presence or absence of appropriateness of the presentation to the user. In this case, for example, if the user is not eligible for presentation (due to a breach of contract, an expired contract, and so on), it is decided that the presentation is not appropriate and permission should not be granted.

Moreover, if presentation permission request information transmitted from the on-vehicle AV apparatus 1 is information requesting permission to present only accompanied information, in step S62, the control section 24 may decide that the presentation of accompanied information is appropriate and thus the presentation of the accompanied information is permitted, on condition that advertisement information is presented. In this case, in step S62, presentation permission information transmitted to the on-vehicle AV apparatus 1 includes conditions for presenting the advertisement information. In step S58, during the reproduction of music data, the on-vehicle AV apparatus 1 having received the conditions for presenting advertisement information presents advertisement information corresponding to the presenting conditions to the user together with accompanied information which is indicated by the presentation permission information and is related to permission for presentation. For example, accompanied information and advertisement information are displayed on the same screen of a liquid crystal display panel to present the information to the user during the reproduction of the music data or during the reproduction/recording of the music data.

As described above, according to Embodiment 2, if related information (e.g., jacket photographic images on a CD) has been provided from the information providing server 2 and stored in a HD of the on-vehicle AV apparatus 1, the related information is presented to the user as follows: the on-vehicle AV apparatus 1 requests the information providing server 2 to permit presentation and presentation is performed if permission is granted. Hence, for example, a label can control the presence or absence of the presentation of related information to the user and to manage the presentation so as to prohibit use not matching the purpose. Namely, for example, if related information provided by a label becomes obsolete and the presentation to the user is not appropriate or if the presentation to the user is not appropriate for other various reasons, it is possible to prevent the presentation of the related information. Further, since presentation permission confirming period (or presentation permission confirming due date) is attached to related information and is determined, the presentation of related information to the user can be controlled in an efficient manner.

Additionally, in Embodiment 2, a request is made to permit the presentation of related information corresponding to the music data in the case of CD reproduction, HD reproduction, or CD ripping. As a modification, other than CD reproduction, HD reproduction, or CD ripping, if related information having been stored in a HD is simply read and is presented to the user, a request may be made to permit the presentation of the related information.

### (Embodiment 3)

Subsequently, an on-vehicle AV system S of Embodiment 3 will be described below. Like Embodiment 2, Embodiment 3 will explain operations after an on-vehicle AV apparatus 1 receives related information from an information providing server 2.

Besides, regarding the components of the on-vehicle AV system S according to Embodiment 1, the explanation about the same configuration and functions is omitted.

First, in addition to the configuration and functions of Embodiment 1, a control section 17 of the on-vehicle AV apparatus 1 according to Embodiment 1 functions as a transmission deciding device and a related information updating device of the present application. Further, instead of the functions of Embodiment 1 (as another example), the control section 17 functions as a related information receiving device and a user presenting device of the present application.

To be specific, in the case of CD reproduction, HD reproduction, or CD ripping, the control section 17 functions as the transmission deciding device, so that the control section 17 decides whether or not TOC information should be transmitted to an information providing server 2 based on presentation permission confirming period (e.g., one week) information or presentation permission confirming due date (e.g., a date) information, which is stored in a HD. The presentationpermission confirming period (or presentation permission confirming due date) of Embodiment 3 is a period (or a due date) for confirming the update of related information stored in a HD . In other words, the presentation permission confirming period is a presentation expiration deadline or a presentation expiry date.

Like Embodiment 2 , the presentation permission confirming period (or presentation permission confirming due date) may be inputted by the user from an input section 22. Presentation permission confirming period information or presentation permission confirming due date information may be attached to each piece of related information.

Then, if it is decided that TOC information should be transmitted to the information providing server 2, the control section 17 functions as an identification information transmitting device, so that the TOC information is transmitted via the network 4 to the information providing server 2. At this point, information indicating a request to confirm the update of related information may be added to TOC information.

Moreover, the control section 17 functions as the related information receiving device, so that related information which has been updated and transmitted from the information providing server 2 according to the TOC information is received via the network 4. Then, the control section 17 functions as a user presenting device, so that the related information which has been updated and received is presented to the user during the reproduction of the music data or during the reproduction/recording of the music data.

Further, the control section 17 functions as the related information updating device, so that related information stored in a HD is updated to the updated related information.

In addition to the configuration and functions of Embodiment 1, a control section 24 of the information providing server 2 according to Embodiment 3 functions as a related information update deciding device of the present application. Further, instead of the functions of Embodiment 1 (as another example), the control section 24 functions as a related information acquiring device and a related information transmitting device of the present application.

To be specific, the control section 24 functions as the related information update deciding device, so that the control section 24 decides whether related information corresponding to received TOC information is updated or not. Moreover, the control section 24 functions as a related information acquiring device. Thus, if related information has been updated, related information having been updated is acquired. Then, the control section 24 functions as the related information transmitting device, so that the acquired related information having been updated is transmitted via the network 4 to the on-vehicle AV apparatus 1.

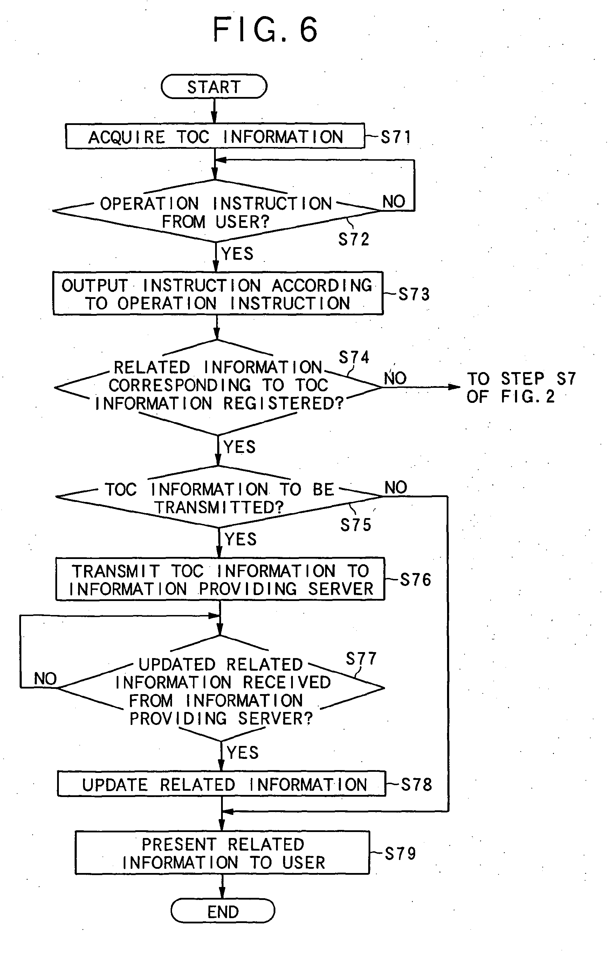

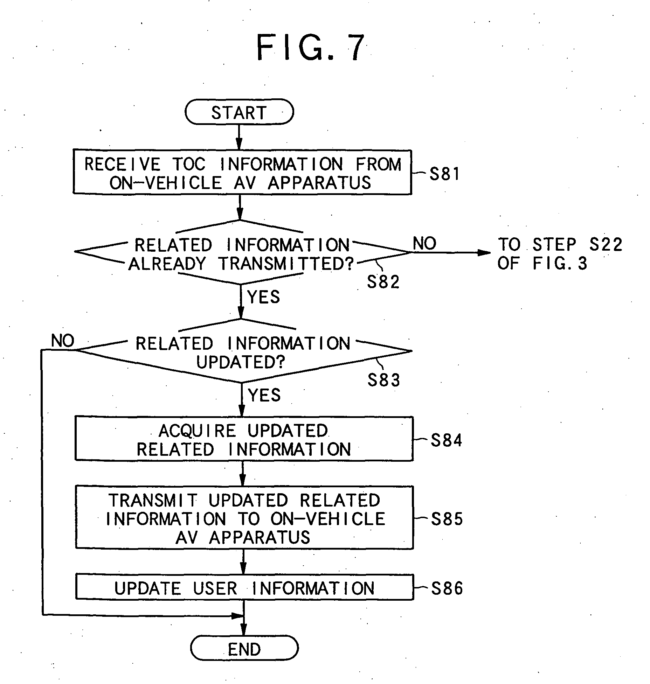

Referring to FIGS. 6 and 7, operations performed by the on-vehicle AV system S of Embodiment 3 will be described below. FIGS. 6 and 7 show processing performed when CD reproduction, HD reproduction, and CD ripping are performed in the on-vehicle AV system S of Embodiment 3 . To be specific, FIG. 6 is a flowchart showing processing performed by the control section 17 of the on-vehicle AV apparatus 1, and FIG. 7 is a flowchart showing processing performed by the control section 24 of the information providing server 2.

Besides, also in Embodiment 3, it is assumed that related information has been already provided from the information providing server 2 and stored in a HD of the on-vehicle AV apparatus 1. However, a part of the related information may be provided from a recording medium such as a detachable CD, DVD, MD, and a card-type recording medium and may be stored in a HD in advance.

Referring to FIG. 6, processing performed in the on-vehicle AV apparatus 1 will be firstly explained. Besides, the processing of FIG. 6 is performed by executing the information presenting program in the control section 17.

In the processing of FIG. 6, the processing of step S71 to step S73 is similar to that of step S1 to step S3 shown in FIG. 2 of Embodiment 1 and thus the explanation thereof will be omitted.

In step S74, the control section 17 decides whether or not related information corresponding to acquired TOC information (or identification information having been attached with related information) is stored in, for example, a HD. If it is decided that related information is not stored (step S74: N) , an advance is made to step S7 shown in FIG. 2 of Embodiment 1. Meanwhile, if it is decided that related information is stored (step S74: Y), the control section 17 decides whether acquired TOC information should be transmitted or not based on presentation permission confirming period (e.g., one week) information or presentation permission confirming due date (e.g., a date) information, which is stored in a HD (step S75). Then, for example, when a presentation permission confirming period (or presentation permission confirming due date) elapses since the related information is stored in a HD, the control section 17 decides that the TOC information should be transmitted (step S75: Y). The control section 17 establishes communication, through a communication section 16, with the information providing server 2 via the network 4 and transmits the TOC information and apparatus register information via the network 4 to the information providing server 2 (step S76). At this point, information indicating a request to confirm the update of related information may be added to the TOC information.

Additionally, the control section 17 may transmit the TOC information via the network 4 to the information providing server 2 for each of CD reproduction, HD reproduction, and CD ripping regardless of presentation permission confirming period information or presentation permission confirming due date information.

Besides, processing performed in the information providing server 2 or the like, which has received the TOC information, will be described later.

Subsequently, when the on-vehicle AV apparatus 1 receives related information which has been transmitted from the information server 2 andupdated (step S77: Y) , the control section 17 updates related information (corresponding to updated related information) stored in a HD to updated related information (step S78).

Then, the control section 17 presents the updated related information to the user during the reproduction of the music data or the reproduction/recording of the music data (step S79). Like step S10 shown in FIG. 2 of Embodiment 1, the control section 17 may prompt (request) the user to select updated related information and present selected related information to the user during the reproduction of music data or the recording of music data.

Additionally, in step S77, if updated related information is not received in a predetermined time (e.g., one minute), the control section 17 may read, from a HD, related information corresponding to the acquired TOC information and present the related information to the user during the reproduction of the music data or the reproduction/recording of the music data.

Referring to FIG. 7, processing performed by the information providing server 2 will be explained below. Besides , the processing of FIG. 7 is performed by executing the information providing program in the control section 24.

In the processing of FIG. 7, when the control section 24 of the information providing server 2 receives TOC information and apparatus identification information, which have been transmitted from the on-vehicle AV apparatus 1, via the network 4 (step S81) , it is decided whether or not related information corresponding to the TOC information (or identification information having been attached with related information) has been already transmitted to the on-vehicle AV apparatus 1 (step S82). For example, if information indicating a request to confirm the update of related information is added to the TOC information, the control section 24 decides that the related information has been already transmitted to the on-vehicle AV apparatus 1. Further, even if information indicating a request to confirm the update of related information is not added to the TOC information, the control section 24 can decide whether or not related information corresponding to the TOC information has been already transmitted to the on-vehicle AV apparatus 1, based on access history included in user information corresponding to the apparatus identification information.

If the related information has not been transmitted to the on-vehicle AV apparatus 1 yet, the processing advances to step S22 shown in FIG. 2 of Embodiment 1. Meanwhile, if the related information has been already transmitted to the on-vehicle AV apparatus 1, the control section 24 decides whether or not related information corresponding to the TOC information is updated (step S83). For example, as described in Embodiment 1, the information providing server 2 transmits TOC information to an information retrieval server 3, specifies related information based on matching information registered in an information matching database 21b based on attribute information returned from the information retrieval server 3, and decides whether updating has been performed or not based on the update history of the related information.

Then, if the control section 24 decides that the related information is updated, the control section 24 acquires updated related information from a related information database 21a (step S84) and transmits the related information via the network 4 to the on-vehicle AV apparatus 1 (step S85).

Subsequently, the control section 24 refers to a user information database 21c and updates user information corresponding to the received apparatus identification information (step S86), that is, updates access history.

As described above, according to Embodiment 3, if related information (e.g., promotion information) has been provided from the information providing server 2 or the like and has been stored in a HD of the on-vehicle AV apparatus 1 , the on-vehicle AV apparatus 1 requests the informationproviding server 2 to update the related information before presenting the related information to the user. If the related information has been updated, updated related information is acquired and is presented to the user. Thus, for example, a label can intentionally manage the presentation of promotion information which can change with time. Further, a presentation permission confirming period (or a presentation permission confirming due date) is attached to related information, and a presentation expiry period (or date) can be determined for each piece of related information. Thus, for example, a label can more efficiently perform promotion to the user.

Additionally, in Embodiment 3 , a request is made to confirm the update of related information corresponding to the music data in the case of CD reproduction, HD reproduction, or CD ripping. As a modification, other than CD reproduction, HD reproduction, or CD ripping, if related information having been stored in a HD is simply read and is presented to the user, a request may be made to confirm the update of the related information.

Incidentally, Embodiment 2 and Embodiment 3 may be combined. For example, if it is decided that presentation is permitted in step S62 shown in FIG. 5 of Embodiment 2, the control section 24 of the information providing server 2 decides whether or not related information corresponding to TOC information is updated. If the related information is updated, updated related information is acquired, and the updated related information is transmitted via the network 4 to the on-vehicle AV apparatus 1 together with the presentation permission information. The control section 17 of the on-vehicle AV apparatus 1 receives updated related information via the network 4 together with the presentation permission information, and presents related information, which is related to permission for presentation and has been updated, to the user instead of related information stored in a HD during the reproduction of the music data or the reproduction/recording of the music data. Additionally, if related information (e.g., only advertisement information) has not been updated in time on the side of the information providing server 2 or if related information (e.g., only advertisement information) which is appropriately presented has not been prepared, the control section 24 may transmit, for example, only presentation permission information (since at least accompanied information is presented) via the network 4 to the on-vehicle AV apparatus 1 on the assumption that the intention of updating is indicated. In this case, the control section 17 of the on-vehicle AV apparatus 1 receives presentation permission information and presents related information (e.g., only accompanied information), which concerns presentation permission stored in a HD, to the user during the reproduction of the music data or the reproduction/recording of the music data.

Further, in the combination of Embodiment 2 and Embodiment 3, if presentation permission request information transmitted from the on-vehicle AV apparatus 1 is information requesting permission to present only accompanied information, the control section 24 may decide that the presentation of accompanied information is appropriate and thus the presentation of the accompanied information is permitted on condition that updated advertisement information is presented. In this case, presentation permission information transmitted to the on-vehicle AV apparatus 1 together with updated advertisement information includes the conditions for presenting the advertisement information. In step S58, the on-vehicle AV apparatus 1 having received the conditions for presenting the advertisement information presents the updated advertisement information corresponding to the presenting conditions to the user during the reproduction of music data, together with accompanied information which is indicated by presentation permission information and concerns permission for presentation. For example, accompanied information and updated advertisement information are displayed on the same screen of a liquid crystal display panel and are presented to the user during the reproduction of the music data or the reproduction/recording of the music data.

### (Embodiment 4)

Then, in Embodiments 1 to 3, examples were explained in which an information providing apparatus of the present application is an information providing server 2 . The following will explain another example in which the information providing apparatus of the present application is constituted of an information providing service server 2A and a contents server 2B.

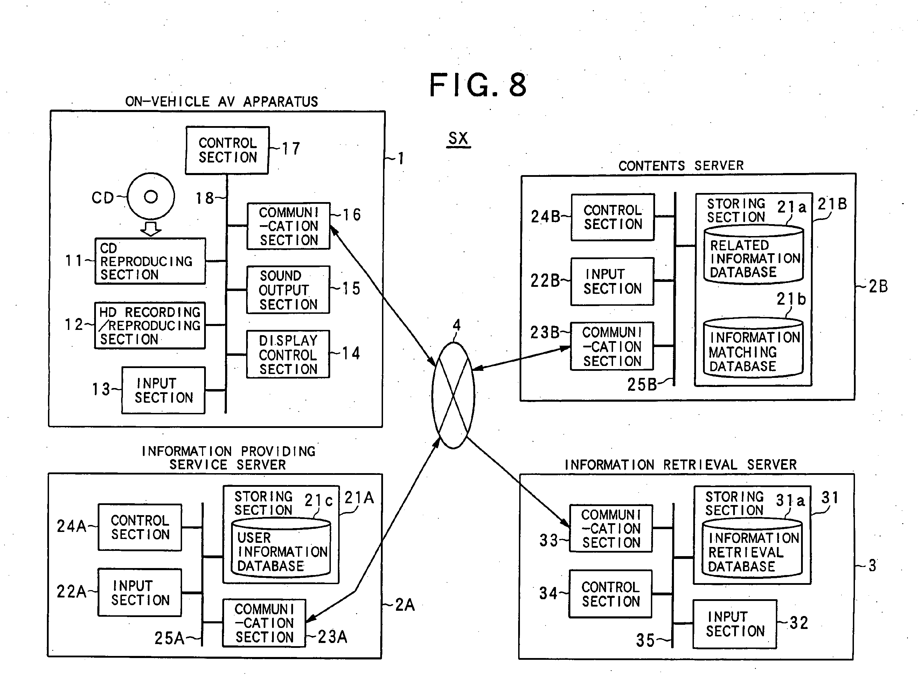

FIG. 8 is a block diagram showing a schematic structural example of an on-vehicle AV system SX according to Embodiment 4. Besides, in FIG. 8 , the same components as FIG . 1 are indicated by the same reference numeral and the explanation thereof is omitted.

The on-vehicle AV system SX of FIG. 8 comprises the information providing service server 2A and the contents server 2B instead of the information providing server 2 of FIG. 1. These servers are connected to each other via a network 4.

Then, the information providing service server 2A is constituted of a storing section 21A, an input section 22A, a communication section 23A, and a control section 24A. These components are connected to one another via a bus 25A. Additionally, the fundamental functions of these components are similar to those of the storing section 21, the input section 22, the communication section 23, the control section 24, and the bus 25 in the information providing server 2.

In the storing section 21A of the information providing service server 2A, the above-described user information database 21c is configured. Further, the control section 24A of the information providing service server 2A functions as an identification information receiving device of the present application and has a function of transmitting received TOC information to the contents server 2B via the network 4 serving as an example of a communication means.

On the other hand, in the storing section 21B of the contents server 2B, the above-described related information database 21a and information matching database 21b are configured. Moreover, the control section 24B of the contents server 2B, receives TOC information transmitted from the information providing service server 2A and functions as a related information acquiring device and a related information transmitting device of the present application.

The configuration of the on-vehicle AV system SX can be used instead of the configurations of the on-vehicle AV systems S according to Embodiments 1 to 3. The following will discuss an example in which the on-vehicle AV system SX is used instead of the on-vehicle AV system S of Embodiment 1.

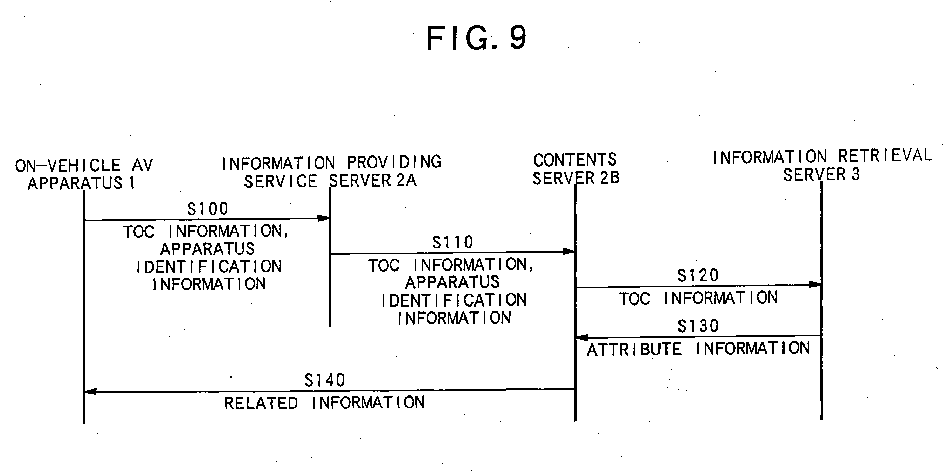

FIG. 9 shows a sequence indicating the flow of information in the on-vehicle AV system SX. Since the processing in the components is similar to that of Embodiment 1, the detailed description is omitted.

As shown in FIG. 9, in the case of CD reproduction, HD reproduction, or CD ripping, an on-vehicle AV apparatus 1 accesses the information providing service server 2A via the network 4 and transmits TOC information and apparatus identification information to the information providing service server 2A (step S100).

Subsequently, the information providing service server 2A receives, via the network 4, the TOC information and apparatus identification information having been transmitted from the on-vehicle AV apparatus 1. At this point, the control section 24A establishes communication with the contents server 2B via the network 4 through the communication section 23A after user identification or the like is made based on apparatus identification information. Then, the control section 24A transmits the TOC information and apparatus identification information via the network 4 to the contents server 2B (step S110).

Subsequently, when the contents server 2B receives, via the network 4, the TOC information and apparatus identification information having been transmitted from the information service server 2A, the control section 24B establishes communication with an information retrieval server 3 via the network 4 through the communication section 23B and transmits the TOC information via the network 4 to the information retrieval server 3 (step S120).

Then, when the information retrieval server 3 receives, via the network 4, the TOC information having been transmitted from the contents server 2B, a control section 34 refers to an information retrieval database 31a, acquires attribute information aboutmusic data corresponding to the TOC information, and transmits (returns) the attribute information to the contents server 2B (step S130).

Subsequently, when the contents server 2B receives, via the network 4 , the attribute information having been transmitted from the information retrieval server 3, the control section 24B acquires, as related information, both or any one of accompanied information and advertisement information that are matched with the attribute information based on matching information registered in the information matching database 21b, and the control section 24B transmits the related information via the network 4 to the on-vehicle AV apparatus 1 (step S140). Additionally, the related information may be transmitted via the information providing service server 2A to the on-vehicle AV apparatus 1.

As described above, according to Embodiment 4, it is possible to distribute the roles of the components (providers) in the on-vehicle AV system SX and efficiently manage the roles.

Further, in Embodiments 1 to 4, TOC information was used as an example of the identification information of the present application. The identification information isnot particularly limited. For example, if text information including the attribute information can be read from a CD according to a CD text standard, the on-vehicle AV apparatus 1 may acquire the text information as identification information instead of TOC information and transmit the information via the network 4 to the information providing server 2 . In this case, the information providing server 2 can acquire attribute information without transmitting text information serving as the identification information to the information retrieval server 3. Moreover, program information such as music data may be used as identification information.

Besides , in Embodiments 1 to 4, the following arrangement is also applicable: after the information providing server 2 transmits presentation permission information via the network 4 to the on-vehicleAV apparatus 1 (e.g., step S63), the information providing server 2 decides whether or not the presentation of related information should be permitted in response to an instruction of the operator or periodically, the information providing server 2 transmits cancellation information, which indicates the cancellation of the permission for the presentation, via the network 4 to the on-vehicle AV apparatus 1 if it is decided that the presentation should not be permitted. In this case, even in a presentation permission confirming period or before a presentation permission confirming due date, the on-vehicle AV apparatus 1 having received the cancellation information stops the presentation of related information indicated by the cancellation information during the reproduction of the music data or the reproduction/recording of the music data. Additionally, the cancellation information about permission for representation includes instruction information which indicates one of the cancellations of only the presentation of accompanied information (all or a part), only the presentation of advertisement information (all or a part), and the presentation of both of the information.

Further, in Embodiments 1 to 4, if it is decided that the presentation is not appropriate and thus the presentation is not permitted (e.g., step S62), the information providing server 3 may serve as an erasure information transmitting device and transmit erasure information via the network 4 to the on-vehicle AV apparatus 1. The erasure information indicates an instruction to erase related information. In this case, the on-vehicle AV apparatus 1 having received the erasure information as an erasure information receiving device, erases (deletes) all pieces of related information to be erased as a related information erasing (deleting) device, which is indicated by the erasure information, from a HD. Additionally, the erasure information of related information includes instruction information which indicates any one of the erasure of only accompanied information (all or a part), the erasure of only advertisement information (all or a part), and the erasure of both of the information.

Moreover, in the above Embodiments 1 to 4, the information retrieval database 31a is provided in the information retrieval server 3. A part of the information retrieval database 31a may be provided beforehand in the on-vehicle AV apparatus 1 serving as a terminal. Namely, attribute information and so on about known music data is provided beforehand in the on-vehicle AV apparatus 1, the attribute information is directly transmitted from the on-vehicle AV apparatus 1, not via the information retrieval server 3, to the information providing server 2, and the information retrieval database 31a of the information retrieval server 3 is used only for attribute information or the like about unknown music data including a new release.

Further, in the above Embodiments 1 to 4, music data recorded on a CD is reproduced and is recorded on a HD as an example of "program information recorded on a recording medium is reproduced and is recorded on another recording medium". As another example, the on-vehicle AV apparatus 1 may download music data (e.g., music data compressed in MP3) fromamusicdistributing server connected to the network 4 and record the data on a HD . In this case, identification information corresponding to music data recorded on a HD may be downloaded from the music distributing server together with the music data. Alternatively, the user may input the identification information when music data is recorded on a HD.

Besides, in the above Embodiments 1 to 4, music data is recorded on a HD as it is . For example , music data may be recorded on a HD after being compressed in formats such as MP3 and ATRAC3 or being encrypted to protect copyrights.

Additionally, in the above Embodiments 1 to 4, the information reproducing apparatus and the information reproducing/recording apparatus of the present application are applied to the on-vehicle AV apparatus. The application of the apparatuses are not particularly limited. For example, the information reproducing apparatus and the information reproducing/recording apparatus may be applied to a domestic AV apparatus and an on-vehicle navigation apparatus.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An information providing system (S), comprising:
an information providing apparatus (2) for providing information via a network (4), and
an information reproducing apparatus (1) which can access to the information providing apparatus via the network (4) and has an information reproducing device (11) for reproducing program information recorded on a recording medium,
**characterized in that** the information reproducing apparatus (1) comprises:
an identification information acquiring device (17) which acquires identification information corresponding to the program information recorded on the recording medium,
an identification information transmitting device (17) which transmits the acquired identification information to the information providing apparatus via the network when the program information recorded on the recording medium is reproduced,
a related information receiving device (17) which receives related information composed of at least any one of accompanied information related the program information and advertisement information related the program information or the accompanied information via the network, the related information being transmitted from the information providing apparatus according to the identification information, and
a user presenting device (17) which presents the related information to a user when the program information is reproduced, and
the information providing apparatus (2) comprises:
an identification information receiving device (24) which receives the identification information transmitted from the information reproducing apparatus via the network,
a related information acquiring device (24) which acquires the related information composed of at least any one of the accompanied information and the advertisement information based on the identification information, and
a related information transmitting device (24) which transmits the related information to the information reproducing apparatus via the network.

2. The information providing system (S) according to claim 1, wherein the information reproducing apparatus (1) comprises an information recording device (17) which reproduces the program information recorded on the recording medium and records the program information on another recording medium.

3. The information providing system (S) according to claim 1 or 2, wherein the recording medium is a detachable recording medium occupied by the user.

4. The information providing system (S) according to any one of claims 1 to 3, wherein the information reproducing apparatus (1) further comprises a related information storing device (17) which matches the related information with the identification information and stores the related information and the identification information in a memory.

5. The information providing system (S) according to claim 4, wherein the identification information transmitting device (17) decides whether or not the related information matched with the identification information is stored in the memory, if it is decided that the related information is stored, the identification information transmitting device (17) acquires the related information matched with the identification information from the memory without transmitting the identification information, and
the user presenting device (17) presents the related information to the user when the program information is reproduced.

6. The information providing system (S) according to any one of claims 1 to 5, wherein the information reproducing apparatus (1) further comprises a selecting instruction receiving device (17) which receives an instruction to select desired related information to be presented from the user, and
the user presenting device (17) presents the selected related information to the user when the program information is reproduced.

7. The information providing system (S) according to any one of claims 1 to 6, wherein the information providing apparatus (2) further comprises a related information selecting device (24) which selects related information to be acquired or transmitted according to the identification information, and
the related information transmitting device (24) transmits the related information selected by the related information selecting device to the information reproducing apparatus.

8. The information providing system (S) according to any one of claims 1 to 7, wherein the information providing apparatus (2) further comprises a user information managing device (24) which manages user information for each user of the information reproducing apparatus (1),
the user information managing device (24) updates the user information based on the identification information every time the identification information is transmitted from the information reproducing apparatus (1), and
the related information acquiring device (24) acquires the advertisement information matching with the user information.

9. The information providing system (S) according to any one of claims 1 to 8, wherein the user presenting device (17) displays the accompanied information and the advertisement information on the same screen to present the accompanied information and the advertisement information to the user.

10. The information providing system (S) according to any one of claims 1 to 9, wherein the accompanied information includes at least any one piece of data about a jacket photograph stored in a package of the recording medium, a photograph printed on a booklet, lyrics, a liner note, music information, artist information, and label information.

11. The information providing system (S, SX) according to any one of claims 1 to 10, wherein the information providing apparatus (2) is constituted of an information providing service server (2A) and a contents server (2B) ,
the information providing service server (2A) comprises the identification information receiving device and transmits the identification information received by the identification information receiving device to the contents server via a communication means,
the contents server (2B) comprises the related information acquiring device, the related information transmitting device, and a related information database for storing the related information and receives the identification information transmitted from the information providing service server, the related information acquiring device acquires the related information from the related information database based on the identification information, and the related information transmitting device transmits the related information to the information reproducing/recording apparatus or the information reproducing/recording apparatus via the network.

12. The information providing system (S) according to any one of claims 1 to 11, wherein the information reproducing apparatus (1) comprises:
a memory for storing the related information composed of at least one of the accompanied information related the program information and the advertisement information related the program information or the accompanied information,
a presentation permission request information transmitting device (17) which transmits presentation permission request information to the information providing apparatus via the network when the program information recorded on the recording medium is reproduced, the presentation permission request information indicating a request to permit presentation of the related information corresponding to the program information, and
a presentation permission information receiving device (17) which receives presentation permission information via the network when the presentation permission information indicating permission to present the related information is transmitted from the information providing apparatus,
the user presenting device (17) reads, from the memory, the related information corresponding to permission for presentation indicated by the presentation permission information and presents the related information to the user when the program information is reproduced, and
the information providing apparatus (2) comprises:
a presentation permission request information receiving device (24) which receives the presentation permission request information transmitted from the information reproducing apparatus,
a presentation permission deciding device (24) which decides whether or not presentation of the related information should be permitted based on the presentation permission request information, and
a presentation permission information transmitting device (24) which transmits the presentation permission information to the information reproducing apparatus via the network if it is decided that the presentation should be permitted.

13. The information providing system (S) according to claim 12, wherein the memory stores presentation permission confirming period information or presentation permission confirming due date information about the related information,
the information reproducing apparatus (1) further comprises a transmission deciding device (17) which decides whether or not the presentation permission request information should be transmitted to the information providing apparatus based on the presentation permission confirming period information or presentation permission confirming due date information, and
the presentation permission request information transmitting device (17) transmits the presentation permission request information to the information providing apparatus via the network if it is decided that the presentation permission request information should be transmitted to the information providing apparatus.

14. The information providing system (S) according to claim 13, wherein the presentation permission confirming period information or presentation permission confirming due date information is attached to the related information and is transmitted from the information providing apparatus.

15. The information providing system (S) according to any one of claims 12 to 14, wherein the presentation permission request information includes the identification information,
the information providing apparatus (2) further comprises a related information update deciding device (24) which decides whether or not the related information corresponding to the identification information is updated if it is decided that presentation should be permitted,
the related information acquiring device (24) acquires updated related information if the related information is updated,
the presentation permission information transmitting device (24) transmits the updated related information together with the presentation permission information to the information reproducing device via the network,
the presentation permission information receiving device (17) receives the updated related information together with the presentation permission information transmitted from the information providing apparatus via the network, and
the user presenting device (17) presents the updated related information instead of the related information stored in the memory to the user when the program information is reproduced.

16. The information providing system (S) according to claim 15, wherein the information reproducing apparatus (1) further comprises a related information updating device (17) which updates related information stored in the memory to the updated related information.

17. The information providing system (S) according to any one of claims 12 to 16, wherein the presentation permission deciding device (24) decides again whether or not presentation of the related information should be permitted after it is decided that presentation of the related information should be permitted,
the presentation permission information transmitting device (24) transmits cancellation information indicating that permission for presentation is cancelled to the information reproducing apparatus via the network if the decision does not permit presentation,
the presentation permission information receiving device (17) receives the cancellation information via the network when the cancellation information is transmitted from the information providing apparatus, and
the user presenting device (17) stops presentation of the related information indicated by the cancellation information.

18. The information providing system (S) according to any one of claims 12 to 17, wherein the information providing apparatus (2) further comprises an erasure information transmitting device (24) which transmits erasure information indicating an instruction to erase the related information to the information reproducing apparatus via the network if the presentation permission deciding device decides that presentation should not be permitted, and
the information reproducing apparatus (1) comprises:
an erasure information receiving device (17) which receives the erasure information via the network when the erasure information is transmitted from the information providing apparatus, and
a related information erasing device (17) which erases related information to be erased from the memory, the related information being indicated by the erasure information.

19. The information providing system (S) according to any one of claims 12 to 18, wherein the presentation permission deciding device (24) decides that presentation of the accompanied information should be permitted on condition that advertisement information of the related information is presented, when the presentation permission request information transmitted from the information reproducing apparatus requests permission to present only the accompanied information of the related information,
the presentation permission information transmitting device (24) includes the condition for presenting the advertisement information into the presentation permission information and transmits the presentation permission information to the information reproducing apparatus via the network, and
the user presenting device (17) presents advertisement information corresponding to the presenting condition to the user together with the accompanied information corresponding to permission for presentation indicated by the presentation permission information when the program information is reproduced.

20. The information providing system (S) according to any one of claims 1 to 11, wherein the information providing apparatus (2) further comprises a related information update deciding device (24) which decides whether or not related information corresponding to the identification information is updated if the identification information is received,
the related information acquiring device (24) acquires the updated related information if the related information is updated,
the related information transmitting device (24) transmits the updated related information to the information reproducing apparatus via the network,
the information reproducing apparatus (1) comprises a memory for storing related information composed of at least any one of accompanied information related the program information and advertisement information related the program information or the accompanied information,
the related information receiving device (17) receives the updated related information when the updated related information corresponding to the identification information is transmitted from the information providing apparatus, and
the user presenting device (17) presents the updated related information to the user when the program information is reproduced.

21. The information providing system (S) according to claim 20, wherein if the updated related information is not received in a predetermined time, the user presenting device (17) reads the related information corresponding to the identification information from the memory and presents the related information to the user when the program information is reproduced.

22. The information providing system (S) according to claim 20 or 21, wherein the memory stores presentation permission confirming period information or presentation permission confirming due date information about the related information,
the information reproducing apparatus (1) further comprises a transmission deciding device (17) which decides whether or not the identification information should be transmitted to the information providing apparatus based on the presentation permission confirming period information or presentation permission confirming due date information, and
the identification information transmitting device (17) transmits the identification information to the information providing apparatus via the network if it is decided that the identification information should be transmitted to the information providing apparatus.

23. The information providing system (S) according to claim 22, wherein the presentation permission confirming period information or presentation permission confirming due date information is attached to the related information and is transmitted from the information providing apparatus.

24. The information providing system (S) according to any one of claims 20 to 23, wherein the information reproducing apparatus (1) further comprises a related information updating device (17) which updates the related information stored in the memory to the updated related information.

25. The information providing system (S) according to any one of claims 12 to 24, wherein a part of the related information has been stored beforehand in the memory.

26. The information providing system (S) according to any one of claims 12 to 25, wherein a part of the related information is provided by a detachable recording medium.

27. An information reproducing apparatus (1) which can have access to an information providing apparatus (2) for providing information via a network and has an information reproducing device for reproducing program information recorded on a recording medium, **characterized in that** the information reproducing apparatus (1) comprises:
an identification information acquiring device (17) which acquires identification information corresponding to the program information recorded on the recording medium,
an identification information transmitting device (17) which transmits the acquired identification information to the information providing apparatus via the network when the program information recorded on the recording medium is reproduced,
a related information receiving device (17) which receives related information composed of at least any one of accompanied information related the program information and advertisement information related the program information or the accompanied information via the network, the related information being transmitted from the information providing apparatus according to the identification information, and
a user presenting device (17) which presents the related information to a user when the program information is reproduced.

28. An information providing apparatus (2) for providing information via a network when being accessed via the network from an information reproducing apparatus (1) having an information reproducing device which reproduces program information recorded on a recording medium, **characterized in that** the information providing apparatus (2) comprises:
an identification information receiving device (24) which receives the identification information transmitted from the information reproducing apparatus via the network,
a related information acquiring device (24) which acquires related information composed of at least any one of accompanied information related the program information and advertisement information related the program information or the accompanied information based on the identification information, and
a related information transmitting device (24) which transmits the related information to the information reproducing apparatus via the network.

29. An information recorded medium wherein a program for computer which can have access to an information providing apparatus for providing information via a network and has an information reproducing device for reproducing program information recorded on a recording medium, is recorded so as to be read by the computer, the program makes the computer function as:
transmitting the acquired identification information to the information providing apparatus via the network when the program information recorded on the recording medium is reproduced,
receiving related information composed of at least any one of accompanied information related the program information and advertisement information related the program information or the accompanied information via the network, the related information being transmitted from the information providing apparatus according to the identification information, and
presenting the related information to a user when the program information is reproduced.

30. An information recorded medium wherein a program for computer for providing information via a network when being accessed via the networkfrom aninformation reproducing apparatus having an information reproducing device which reproduces program information recorded on a recording medium, is recorded so as to be read by the computer, the program makes the computer function as:
receiving the identification information transmitted from the information reproducing apparatus via the network,
acquiring related information composed of at least any one of accompanied information related the program information and advertisement information related the program information or the accompanied information based on the identification information, and
transmitting the related information to the information reproducing apparatus via the network.

31. An information providing method in an information providing system (S) comprising an information providing apparatus (2) for providing information via a network, and an information reproducing apparatus (1) which can have access to the information providing apparatus via the network and has an information reproducing device for reproducing program information recorded on a recording medium, **characterized in that** the method comprises the processes of:
acquiring identification information corresponding to the program information recorded on the recording medium in the information reproducing apparatus,
transmitting the acquired identification information to the information providing apparatus via the network when the program information recorded on the recording medium is reproduced,
receiving related information composed of at least any one of accompanied information related the program information and advertisement information related the program information or the accompanied information via the network, the related information being transmitted from the information providing apparatus according to the identification information, and
presenting the related information to a user when the program information is reproduced in the information reproducing apparatus,
receiving the identification information transmitted from the information reproducing apparatus via the network in the information providing apparatus,
acquiring the related information composed of at least any one of the accompanied information and the advertisement information based on the identification information, and
transmitting the related information to the information reproducing apparatus via the network.
